# EUROPÄISCHE PATENTSCHRIFT

(11) **EP 2 871 421 B1**
(45) Veröffentlichungstag und Bekanntmachung des Hinweises auf die Patenterteilung: **12.04.2017**
(21) Anmeldenummer: 13192027.4
(22) Anmeldetag: 07.11.2013
(51) Int. Cl.: F24D 3/10, F24D 3/12, F24D 3/14, F24D 19/10, F24F 5/00

(54) **Hydraulischer Verteiler für ein hydraulisches Heizungs- und/oder Kühlsystem**
Hydraulic distributor for a hydraulic heating and/or cooling system
Distributeur hydraulique pour un système de chauffage et/ou de refroidissement hydraulique

(43) Veröffentlichungstag der Anmeldung: 13.05.2015
(73) Patentinhaber: Grundfos Holding A/S, 8850 Bjerringbro (DK)
(72) Erfinder: Sørensen, Søren, Emil, 8860 Ulstrup (DK); Andersen, Rasmus, Hessellund, 8230 Àbyhøj (DK)
(74) Vertreter: Patentanwälte Vollmann & Hemmer

(56) Entgegenhaltungen:
- WO-A1-2008/041897
- DE-A1-102006 010 562
- DE-U1-202009 003 093
- US-B1- 6 345 770

## Beschreibung

Die Erfindung betrifft einen hydraulischen Verteiler für ein hydraulisches Heizungs- und/oder Kühlsystem mit den im Oberbegriff des Anspruchs 1 angegebenen Merkmalen.

Beispielsweise in Fußbodenheizungsanlagen sind hydraulische Verteiler vorgesehen, an welche die einzelnen Fußbodenheizungskreise angeschlossen sind. Die Verteiler sind dabei im Wesentlichen aus zwei Rohren gebildet, einem Rohr, welches eine Zulaufleitung bildet, und einem Rohr, welches eine Rücklaufleitung bildet. An den beiden Rohren ist eine bestimmte Anzahl von Anschlüssen für die einzelnen Heizungskreise bzw. Lastkreise vorgesehen, wobei jeder Lastkreis mit einem Ende mit der Zulaufleitung und mit dem anderen Ende mit einem Anschluss der Rücklaufleitung verbunden wird. Nachteilig bei diesen hydraulischen Verteilern ist, dass sie für eine vorbestimmte Anzahl von Heizungskreisen gefertigt sind, sodass für verschiedene Heizungsanlagen mit verschiedenen Zahlen von Lastkreisen verschiedene Verteiler vorgehalten werden müssen.

DE 10 2006 010 562 A1 offenbart einen Verteiler für ein Heizungs- oder Kühlsystem, welcher aus mehreren Bereichen zusammengesetzt ist. So gibt es einen Anschlussbereich, welcher zum Anschluss an eine Heizungs- oder Kühlanlage vorgesehen ist und mit diesem verbundene Verteilerbereiche, an welchen verschiedene Lastkreise angeschlossen werden können. Ferner ist eine Steuereinrichtung vorgesehen, welche an dem Anschlussbereich angebracht sein kann. Im Hinblick auf den bekannten Stand der Technik ist es Aufgabe der Erfindung, einen hydraulischen Verteiler für ein hydraulisches Heizungs- und/oder Kühlsystem bereitzustellen, welche universell für Heizungsanlagen mit verschiedenen Anzahlen von Lastkreisen verwendet werden kann und eine optimierte Regelung der einzelnen Lastkreise ermöglicht.

Diese Aufgabe wird durch einen hydraulischen Verteiler mit den in Anspruch 1 angegebenen Merkmalen gelöst. Bevorzugte Ausführungsformen ergeben sich aus den Unteransprüchen, der nachfolgenden Beschreibung sowie den beigefügten Figuren.

men ergeben sich aus den Unteransprüchen, der nachfolgenden Beschreibung sowie den beigefügten Figuren.

Der erfindungsgemäße hydraulische Verteiler bildet eine Baueinheit und kann in einem hydraulischen Heizungs- und/oder Kühlsystem Verwendung finden, d. h. in einem Heizungs- und/oder Kühlsystem, welches ein Fluid bzw. eine Flüssigkeit als Wärmeträger verwendet. Bevorzugt handelt es sich bei der Flüssigkeit um Wasser. Der Wärmeträger wird ausgehend von einer Wärme- oder Kältequelle durch Rohrleitungen in die zu temperierenden Räume bzw. Objekte geleitet. Zur Verteilung des Fluids auf mehrere Lastkreise ist der hydraulische Verteiler gemäß der Erfindung vorgesehen. Der hydraulische Verteiler weist dazu eine Zulaufleitung und eine Rücklaufleitung auf. An die Zulaufleitung werden die Eingänge der Lastkreise und an die Rücklaufleitung die Ausgänge der Lastkreise angeschlossen. Die Zulaufleitung und die Rücklaufleitung sind dann wiederum mit der Heizungs- oder Kühlanlage, d. h. über weitere Rohrleitungen mit einer Wärme- und/oder Kältequelle, verbunden. Dabei ist zu verstehen, dass das System ausschließlich als Heizungssystem oder ausschließlich als Kühlsystem oder aber als System, welches sowohl der Heizung als auch der Kühlung dienen kann, ausgelegt sein kann. So kann beispielsweise das System im Sommer zur Kühlung und im Winter zur Heizung verwendet werden.

Die Zulaufleitung weist zumindest einen Zulaufanschluss und die Rücklaufleitung zumindest einen Rücklaufanschluss auf, an welche zumindest ein Lastkreis angeschlossen wird. Dabei wird der Eingang des Lastkreises an den Zulaufanschluss und der Ausgang des Lastkreises an den Rücklaufanschluss angeschlossen.

Um eine universelle Verwendung des hydraulischen Verteilers für Heizungs- bzw. Kühlsysteme mit unterschiedlichen Anzahlen von Lastkreisen zu ermöglichen, ist der erfindungsgemäße hydraulische Verteiler modular aufgebaut. Er weist zumindest ein Hauptmodul und zumindest ein an dieses lösbar angesetztes oder ansetzbares Lastmodul auf. Das Hauptmodul dient der Versorgung und Steuerung, während das Lastmodul zum Anschluss eines Lastkreises dient. Wenn mehrere Lastkreise vorhanden sind, ist eine entsprechende Anzahl von Lastmodulen, d. h. ein Lastmodul pro Lastkreis vorgesehen. Der modulare Aufbau ermöglicht es, eine gewünschte Anzahl von Lastmodulen zur Anpassung des hydraulischen Verteilers an ein spezifisches Kühl- bzw. Heizungssystem mit dem einen Hauptmodul zu verbinden. Die zusammengesetzten Module bilden dann eine Baueinheit. Das Hauptmodul weist zumindest einen Abschnitt der Zulaufleitung und/oder der Rücklaufleitung sowie einen elektrischen Anschluss auf. Besonders bevorzugt weist das Hauptmodul Abschnitte sowohl der Zulaufleitung als auch der Rücklaufleitung auf.

Auch das zumindest eine Lastmodul weist einen Abschnitt der Zulaufleitung mit einem Zulaufanschluss und einen Abschnitt der Rücklaufleitung mit einem Rücklaufanschluss auf. An den Zulaufanschluss und den Rücklaufanschluss wird in der oben beschriebenen Weise ein Lastkreis angeschlossen. Ferner weist das zumindest eine Lastmodul eine Reguliereinrichtung zum Regulieren des Durchflusses durch einen an den Zulauf- und den Rücklaufanschluss angeschlossenen Lastkreis auf. Die Regulierung des Durchflusses ermöglicht eine Veränderung im Betrieb der Heizungsanlage zur Anpassung an einen aktuellen Energiebedarf des Lastkreises. Die Reguliereinrichtung kann vorzugsweise als motorbetriebenes Ventil, insbesondere Proportionalventil oder als Umwälzpumpe ausgebildet sein. Es können jedoch auch auf andere Weise angetriebene Ventile, z. B. thermoelektrisch angetriebene Ventile mit entsprechender zeitlich variierter Ansteuerung verwendet werden. Im Falle eines Ventils wird die Durchflussregelung bzw. -steuerung durch Veränderung des Öffnungsgrades des Ventils erreicht. Im Falle einer Umwälzpumpe kann der Durchfluss durch Drehzahländerung der Umwälzpumpe erreicht werden. Bei Verwendung eines Ventils ist dieses vorzugsweise so ausgestaltet, dass es auch vollständig geschlossen werden kann, um den Lastkreis ganz abzuschalten, wie es unten beschrieben wird.

Die Reguliereinrichtung ist im Inneren des Lastmoduls in einem der Strömungswege im Zulauf oder im Rücklauf zu dem Lastkreis angeordnet. D. h. die Reguliereinrichtung kann zwischen dem Zulaufanschluss und dem Abschnitt der Zulaufleitung oder zwischen dem Rücklaufanschluss und dem Abschnitt der Rücklaufleitung im Strömungsweg im Inneren des Lastmoduls angeordnet sein.

Erfindungsgemäß weist das Hauptmodul eine Verteiler-Steuereinrichtung auf, welche zur Steuerung der Reguliereinrichtung in dem zumindest einen und vorzugsweise in mehreren Lastmodulen vorgesehen ist. Die Verteiler-Steuereinrichtung in dem Hauptmodul bildet so eine zentrale Steuereinrichtung, welche die Reguliereinrichtungen in den Lastmodulen, vorzugsweise in allen Lastmodulen steuert bzw. regelt. Die zentrale Steuerung der Reguliereinrichtungen hat den Vorteil, dass in der Steuerung Wechselwirkungen zwischen den einzelnen Lastkreisen berücksichtigt werden können und so die Gesamtanlage optimal gesteuert werden kann, sodass jeder Lastkreis optimal mit der erforderlichen Menge des Wärmeträgers versorgt wird. Darüber hinaus hat diese Ausgestaltung den Vorteil, dass nur eine Steuereinrichtung für das Gesamtsystem vorgesehen werden muss und die Lastmodule keine aufwändigen elektronischen Komponenten benötigen, sodass der Aufbau der Lastmodule vereinfacht und so die Kosten für die Lastmodule reduziert werden können. Die beschriebenen elektrischen Kupplungen stellen eine elektrische Verbindung zwischen der Verteiler-Steuereinrichtung in den Hauptmodul und den Reguliereinrichtungen in den Lastmodulen zu deren Ansteuerung her. Dabei kann bevorzugt auch eine bidirektionale Kommunikation zwischen der Verteiler-Steuereinrichtung und den Lastmodulen vorgesehen sein, über welche beispielsweise Rückmeldungen von den Reguliereinrichtungen, beispielsweise über den Öffnungsgrad und/oder Sensordaten von zusätzlich in den Lastmodulen angeordneten Sensoren an die Verteiler- Steuereinrichtung übertragen werden.

Ferner weisen das Hauptmodul und das Lastmodul bevorzugt zueinander korrespondierende mechanische und hydraulische Kupplungen sowie eine elektrische Verbindung auf. Diese sind so ausgestaltet, dass sie eine lösbare, mechanische, hydraulische und elektrische Verbindung zwischen dem Hauptmodul und dem Lastmodul ermöglichen. Die mechanischen Kupplungen zwischen Hauptmodul und Lastmodul ermöglichen dabei eine lösbare mechanische Verbindung zwischen Last- und Hauptmodul, sodass diese aneinandergehalten bzw. mechanisch aneinander fixiert werden. Die elektrische Verbindung kann z. B. eine Steck- oder Kabelverbindung sein.

Die hydraulischen Kupplungen ermöglichen eine Verbindung der Strömungswege von Lastmodul und Hauptmodul. So werden über hydraulische Kupplungen die Abschnitte der Zulaufleitung in dem Lastmodul und dem Hauptmodul lösbar und dicht miteinander verbunden, sodass sie eine durchgängige Zulaufleitung bilden. Entsprechend oder alternativ kann ein Abschnitt einer Rücklaufleitung in dem Hauptmodul mit einem Abschnitt der Rücklaufleitung in dem Lastmodul über eine hydraulische Kupplung lösbar miteinander verbunden werden, sodass eine durchgehende Rücklaufleitung zwischen Haupt- und Lastmodul geschaffen wird. Es ist zu verstehen, dass das Hauptmodul zumindest einen Abschnitt der Zulaufleitung oder einen Abschnitt der Rücklaufleitung aufweist, wobei dieser Abschnitt entsprechend mit dem zugehörigen Abschnitt der Rücklaufleitung oder dem zugehörigen Abschnitt der Zulaufleitung in dem Lastmodul über eine hydraulische Verbindung verbunden ist. Bevorzugt weist auch das Hauptmodul sowohl einen Abschnitt der Zulaufleitung als auch einen Abschnitt der Rücklaufleitung auf, welche in der beschriebenen Weise über die hydraulischen Kupplungen mit den anschließenden Abschnitten der Zulauf- und der Rücklaufleitung in dem Lastmodul verbunden werden.

Die lösbare elektrische Kupplung, welche beispielsweise als Steckkupplung ausgebildet sein kann, stellt eine lösbare elektrische Verbindung zwischen dem Haupt- und Lastmodul her. Diese dient insbesondere der Energieversorgung der Reguliereinrichtung in dem Lastmodul. Bevorzugt sind sowohl die mechanische als auch die hydraulische und die elektrische Kupplung als Steckkupplungen ausgebildet, sodass das Lastmodul in einfacher Weise lösbar an das Hauptmodul angesteckt werden kann, wobei gleichzeitig eine mechanische Verbindung, die erforderlichen hydraulischen Verbindungen sowie die erforderliche elektrische Verbindung hergestellt werden. Dies ermöglicht eine sehr einfache Montage.

Das Lastmodul weist vorzugsweise an einem ersten Längsende erste hydraulische Kupplungen in Form einer ersten Rücklaufkupplung, welche mit dem Abschnitt der Rücklaufleitung im Inneren des Lastmoduls verbunden ist, und einer ersten Zulaufkupplung, welche mit dem Abschnitt der Zulaufleitung in dem Lastmodul verbunden ist, auf. Dieses erste Längsende ist dasjenige Längsende, an welchem die Verbindung zu dem Hauptmodul hergestellt wird, d. h. mit welchem das Lastmodul an eine Seite des Hauptmoduls angesetzt wird.

Vorzugsweise weist das Hauptmodul an einer dem Lastmodul zugewandten Seite bzw. einem dem Lastmodul zugewandten Längsende hydraulische Kupplungen auf, welche eine Zulaufkupplung und eine Rücklaufkupplung aufweisen und welche derart ausgestaltet sind, dass sie mit den ersten hydraulischen Kupplungen an dem Lastmodul in Eingriff treten können. Die Zulaufkupplung ist mit dem Abschnitt der Zulaufleitung in dem Hauptmodul und die Rücklaufkupplung mit dem beschriebenen Abschnitt der Rücklaufleitung in dem Hauptmodul verbunden. Wenn das Lastmodul an das Hauptmodul angesetzt wird, tritt die erste Zulaufkupplung des Lastmoduls mit der Zulaufkupplung an dem Hauptmodul in Verbindung und stellt eine dichte hydraulische Verbindung her, welche den Abschnitt der Zulaufleitung in dem Hauptmodul mit dem Abschnitt der Zulaufleitung in dem Lastmodul hydraulisch verbindet. Entsprechend tritt die Rücklaufkupplung an dem Hauptmodul mit der ersten Rücklaufkupplung an dem Lastmodul in dichte fluidleitende Verbindung, sodass ein durchgängiger Strömungsweg von dem Abschnitt der Rücklaufleitung in dem Lastmodul zu dem Abschnitt der Rücklaufleitung in dem Hauptmodul hergestellt wird. Die Zulaufkupplungen und die Rücklaufkupplungen sind vorzugsweise als Steckkupplungen ausgebildet und weisen erforderliche Dichtungen zur Abdichtung nach außen, beispielsweise O-Ringe, welche zwischen gegenüberliegenden Dichtflächen zur Anlage kommen, auf.

Weiter bevorzugt weist das Lastmodul an einem zweiten, dem ersten Längsende entgegengesetzten Längsende zwei hydraulische Kupplungen in Form einer zweiten Rücklaufkupplung, welche mit dem Abschnitt der Rücklaufleitung verbunden ist, und einer zweiten Zulaufkupplung, welche mit dem Abschnitt der Zulaufleitung im Inneren des Lastmoduls verbunden ist, auf, wobei die zweiten hydraulischen Kupplungen derart angeordnet und ausgestaltet sind, dass sie mit den ersten hydraulischen Kupplungen eines weiteren Lastmoduls in Eingriff treten können. Dies ermöglicht es, mehrere Lastmodule aneinander zu reihen und dabei hydraulische Verbindungen zwischen den Lastmodulen herzustellen. Dabei greift jeweils eine erste Zulaufkupplung eines Lastmoduls in die zweite Zulaufkupplung eines zweiten Lastmoduls ein, während gleichzeitig die erste Rücklaufkupplung des ersten Lastmoduls in die zweite Rücklaufkupplung des zweiten Lastmoduls eingreift. Der Abschnitt der Zulaufleitung im Inneren des Lastmoduls stellt somit vorzugsweise eine Verbindung zwischen der ersten und der zweiten Zulaufkupplung dieses Lastmoduls her, während der Abschnitt der Rücklaufleitung im Inneren des Lastmoduls die erste und die zweite Rücklaufkupplung dieses Lastmo-Lastmoduls hydraulisch miteinander verbindet. Auf diese Weise können mehrere Lastmodule in der Längsrichtung, in welcher das erste und das zweite Längsende voneinander abgewandt sind, aneinander gereiht werden, um gemeinsam einen hydraulischen Verteiler mit genau der gewünschten Zahl von Anschlüssen für Lastkreise, d. h Zulauf- und Rücklaufanschlüssen zu bilden. Da in jedes Lastmodul zusätzlich eine Reguliereinrichtung integriert ist, wird gleichzeitig die erforderliche Anzahl von Reguliereinrichtungen für die gewünschte Zahl von Lastkreisen angeordnet. Der erfindungsgemäße hydraulische Verteiler lässt sich so durch einfaches Aneinanderstecken einer gewünschten Zahl von Lastmodulen anpassen, um eine gewünschte Zahl von Lastkreisen versorgen und regeln zu können. Das letzte Lastmodul kann an seinem zweiten Längsende durch ein Abschlussmodul verschlossen sein, welches gegebenenfalls weitere hydraulische Bauteile, wie einen Entlüfter, aufweisen kann.

Erfindungsgemäß weist die Verteiler-Steuereinrichtung zumindest eine Kommunikationsschnittstelle zum Empfang von Signalen von einem externen Steuerelement in Form eines Raumthermostates auf. Die Kommunikationsschnittstelle ist so ausgebildet, dass sie mit mehreren Steuerelementen, d. h. insbesondere mehreren Raumthermostaten, kommunizieren kann. Beispielsweise können mehrere Lastkreise mit entsprechend mehreren Lastmodulen vorgesehen sein, wobei jeder Lastkreis beispielsweise zur Temperierung eines Raumes in einem Gebäude vorgesehen ist. Dabei wird bevorzugt ein Raumthermostat in jedem dieser Räume angeordnet, welcher die aktuelle Raumtemperatur erfasst und mit der Kommunikationsschnittstelle der Verteiler-Steuereinrichtung kommuniziert. Das Steuerelement in Form eines Raumthermostates kann darüber hinaus ausgebildet sein, um eine gewünschte Raumtemperatur vorwählen zu können. Bei Abweichung der tatsächlich erfassten Raumtemperatur schnittstelle, dass eine Temperierung des Raumes über den Lastkreis erforderlich ist. Die Verteiler-Steuereinrichtung veranlasst dann, dass der zugehörige Lastkreis eingeschaltet, d. h. geöffnet, wird. Dazu steuert die Verteiler-Steuereinrichtung die Reguliereinrichtung in dem zugehörigen Lastmodul für diesen Lastkreis so an, dass die Reguliereinrichtung den Lastkreis öffnet. D. h. beispielsweise wird ein Ventil von einer geschlossenen Position in eine geöffnete Position bewegt. Wenn als Reguliereinrichtung eine Umwälzpumpe vorgesehen ist, wird der Lastkreis durch Einschalten der Umwälzpumpe in Betrieb genommen bzw. eingeschaltet. Diese Ausgestaltung bedeutet somit, dass vorzugsweise einzelne Steuerelemente bzw. Raumthermostate nicht direkt mit zugehörigen Lastmodulen des hydraulischen Verteilers kommunizieren, sondern bevorzugt mit der zentralen Verteiler-Steuereinrichtung, welche dann ihrerseits die Lastmodule bzw. die in den Lastmodulen angeordneten Reguliereinrichtungen steuert. Auf dies Weise vereinfacht sich wiederum der Aufbau, da die gesamte Kommunikation und Steuerung durch die Verteiler-Steuereinrichtung ausgeführt werden kann.

Besonders bevorzugt sind die hydraulischen Kupplungen jeweils als Steckkupplungen mit einem männlichen Kupplungsteil und einem korrespondierenden weiblichen Kupplungsteil ausgebildet, wobei bei der Kupplung der männliche Kupplungsteil in den weiblichen Kupplungsteil eingreift. Diese Ausgestaltung ermöglicht die Verwendung einer radialen Dichtung. Darüber hinaus kann eine gewisse Führung beim Zusammenstecken der Kupplung durch das Ineinandergreifen gegeben sein. Es ist möglich, dass die hydraulischen Kupplungen an dem Hauptmodul als männliche Kupplungsteile und die ersten hydraulischen Kupplungen an dem Lastmodul als weibliche Kupplungsteile oder umgekehrt ausgebildet sind. Das Lastmodul weist, wenn es hydraulische Kupplungen an zwei entgegengesetzten Seiten aufweist, an einer Seite jeweils einen männlichen Kupplungsteil und an der entgegengesetzten Seite einen korrespondierenden weiblichen Kupplungsteil. Bei der Anordnung von Rücklaufkupplung und Zulaufkupplung ist es möglich, dass an einer Seite beide dieselbe Gestalt haben, d. h. beide als männlicher Kupplungsteil oder als weiblicher Kupplungsteil ausgebildet sind. Auch ist es möglich, an einer Seite beispielsweise die Rücklaufkupplung als weiblichen Kupplungsteil und die Zulaufkupplung als männlichen Kupplungsteil oder umgekehrt auszubilden.

Das Lastmodul weist an einem ersten Längsende zumindest einen ersten elektrischen Steckkontakt als Teil einer elektrischen Kupplung auf, wobei an dem Hauptmodul an einer dem Lastmodul zugewandten Seite ein korrespondierender zweiter elektrischer Steckkontakt ausgebildet ist, welcher mit dem ersten Steckkontakt des Lastmoduls lösbar in Kontakt bringbar ist. Der erste und der zweite elektrische Steckkontakt können als männlicher und weiblicher Steckkontakt ausgebildet sein, welche ineinandergreifen. Alternativ können auch in anderer Weise in Kontakt kommende Steckkontakte Verwendung finden. Die elektrischen Steckkontakte können ein- oder mehrpolig ausgebildet sein. Bevorzugt sind sie mehrpolig ausgebildet, um so eine Energieversorgung für die Reguliereinrichtungen und gegebenenfalls eine Datenübertragung von Sensoren oder weiteren elektronischen Bauteilen zu ermöglichen.

Ferner weist das Lastmodul an einem zweiten dem ersten Längsende entgegengesetzten zweiten Längsende einen zweiten elektrischen Steckkontakt auf, welcher mit einem ersten elektrischen Steckkontakt an einem ersten Längsende eines zweiten Lastmoduls lösbar in Kontakt bringbar ist. Dieser zweite elektrische Steckkontakt entspricht in seiner Ausgestaltung dem zweiten elektrischen Steckkontakt an dem Hauptmodul. Dies ermöglicht es, bei Aneinanderreihung mehrerer Lastmodule diese elektrisch miteinander zu kontaktieren. Dabei können alle Lastmodule gleich ausgebildet sein und es ist möglich, ein Lastmodul entweder an das Hauptmodul anzusetzen oder in Längsrichtung an ein vorangehendes Lastmodul anzusetzen. So kann eine gewünschte Zahl von Lastmodulen zusammengefügt und miteinander kombiniert werden, um eine gewünschte Zahl von Lastkreisen anschließen und versorgen zu können.

Weiters sind in dem zumindest einen Lastmodul der erste und der zweite elektrische Steckkontakt elektrisch, insbesondere nach Art eines Datenbusses, miteinander verbunden. Diese Ausgestaltung ermöglicht es, mehrere Lastmodule elektrisch in Reihe zu schalten bzw. aneinander zu fügen, wobei eine Energieversorgung und/oder eine Datenübertragung durch die aneinandergefügten Lastmodule hindurch zu den nachfolgenden Lastmodulen möglich wird. Ein Datenbus hat den Vorteil, dass dieser es ermöglicht, eine Vielzahl von Lastmodulen miteinander zu kombinieren bzw. aneinander zu fügen, ohne dass sich dadurch die Zahl der erforderlichen Leiter in den elektrischen Verbindungen erhöht. Darüber hinaus können alle Lastmodule identisch ausgestaltet und in beliebiger Reihenfolge aneinandergefügt werden.

Die Lastmodule weisen vorzugsweise eine Kommunikationseinheit auf, welche die Kommunikation mit der Verteiler-Steuereinrichtung übernimmt. Dabei sind die Kommunikationseinheit und die Verteiler-Steuereinrichtung vorzugsweise so ausgebildet, dass diese sich selbsttätig koppeln. D. h. beide tauschen Adressen miteinander aus und stellen eine Kommunikationsverbindung her, sodass jedes Lastmodul von der Verteiler-Steuereinrichtung eindeutig adressiert werden kann. Dazu kann jedes Lastmodul eine feste individuelle Adresse aufweisen. Bevorzugt jedoch erkennt die Verteiler-Steuereinrichtung, wenn ein neues Lastmodul direkt mit dem Hauptmodul oder einem bereits an das Hauptmodul angesteckten Lastmodul verbunden wird. Die Verteiler-Steuereinrichtung ist dazu so ausgebildet, dass sie dann eine Adresse an das neu angeschlossene Lastmodul bzw. dessen Kommunikationseinheit vergibt, sodass dieses Lastmodul und dessen Kommunikationseinheit dann eindeutig adressiert werden können, um über die Kommunikationseinheiten die Reguliereinrichtung in dem zugehörigen Lastmodul steuern zu können. Entsprechend kann auch ein Datenaustausch von Sensoren in dem Lastmodul über die Kommunikationseinheit zu der Verteiler-Steuereinrichtung erfolgen. Die Kommunikation erfolgt dabei bevorzugt über einen elektrischen Datenbus. Es ist jedoch auch eine Kommunikation über eine optische Signalverbindung oder beispielsweise über eine Funkverbindung denkbar. Für den Datenbus können separate elektrische Leitungen verwendet werden. Alternativ kann die Kommunikation auch über die der Energieversorgung der Reguliereinrichtungen dienenden elektrischen Leiter erfolgen.

Gemäß einer weiteren bevorzugten Ausführungsform ist die Reguliereinrichtung in dem Lastmodul mit dem ersten elektrischen Steckkontakt zur Energieversorgung verbunden. So wird die Reguliereinrichtung über den Steckkontakt mit Energie versorgt. Dies kann direkt geschehen oder über ein zwischengeschaltetes Steuerelement oder eine zwischengeschaltete Kommunikationseinheit, welche Steuersignale über einen Datenbus empfängt. Die Steuereinheit oder Kommunikationseinheit stellt dann die Verbindung zu der Energieversorgung zur gezielten Ansteuerung der Reguliereinrichtung her.

Besonders bevorzugt weist das zumindest eine Lastmodul eine elektronische Modul-Steuereinrichtung auf, welche elektrisch mit dem ersten Steckkontakt und der Reguliereinrichtung verbunden ist und zur Kommunikation mit der Verteiler-Steuereinrichtung in dem Hauptmodul sowie zur Ansteuerung der Reguliereinrichtung ausgebildet ist. Die Modul-Steuereinrichtung übernimmt somit die Funktion der vorangehend beschriebenen Kommunikationseinheit bzw. der beschriebenen Steuereinheit. Sie dient vorzugsweise der eindeutigen Adressierung des Lastmoduls und der Ansteuerung der Reguliereinrichtung in dem Lastmodul von der Verteiler-Steuereinrichtung.

Dabei sind die Modul-Steuereinrichtung des zumindest einen Lastmoduls und die Verteiler-Steuereinrichtung bevorzugt über einen Datenbus miteinander verbunden und vorzugsweise zur automatischen Kommunikations-Kopplung ausgebildet. Der Datenbus ist vorzugsweise ein elektrischer Datenbus, welcher über die Steckkontakte miteinander verbunden wird. D. h. in dem jeweiligen Lastmodul verläuft der Datenbus von dem ersten zu dem zweiten beschriebenen Steckkontakt. Die automatische Kommunikations-Kopplung kann in der oben beschriebenen Weise, beispielsweise durch Empfang einer Adresse von der Verteiler-Steuereinrichtung, erfolgen. Dies ermöglicht es, dass die Module einfach zusammengefügt werden können und die Kommunikations-Kopplung weitgehend automatisch erfolgt. Gegebenenfalls können an den Lastmodulen und/oder an dem Hauptmodul Betätigungselemente angeordnet sein, über welche ein Nutzer den Kopplungs-Vorgang manuell starten kann.

Gemäß einer weiteren bevorzugten Ausführungsform ist in dem Lastmodul zumindest ein Temperatursensor derart angeordnet, dass er die Temperatur eines durch den Rücklaufanschluss strömenden Fluids erfasst, wobei der Temperatursensor vorzugsweise mit der Verteiler-Steuereinrichtung signalverbunden ist. Diese Signalverbindung kann ebenfalls über eine Modul-Steuereinrichtung oder eine Kommunikationseinheit geschehen. Insbesondere erfolgt die Datenübertragung ebenfalls über den beschriebenen Datenbus. Die Erfassung der Temperatur im Rücklauf des Lastkreises ist zur Regelung des jeweiligen Lastkreises von Vorteil, wobei die Regelung bevorzugt für alle Lastkreise zentral von der Verteiler-Steuereinrichtung in dem Hauptmodul übernommen wird.

Zweckmäßigerweise weist das zumindest eine Lastmodul an einem ersten Längsende zumindest eine erste mechanische Kupplung und das Hauptmodul an einer dem Lastmodul zugewandten Seite zumindest eine zweite mechanische Kupplung auf, welche lösbar mit der ersten mechanischen Kupplung verbindbar ist. Dies kann eine Steckkupplung sein. Die lösbare Verbindung kann bevorzugt über lösbare Rast- und/oder Klemmelemente oder zusätzliche Sicherungselemente wie Sicherungsbügel oder Sicherungsstifte, welche nach erfolgter Verbindung von Last- und Hauptmodul in die Kupplung eingesetzt werden, erfolgen. Bevorzugt ist die Kupplung so ausgestaltet, dass sie ohne spezielles Werkzeug zusammenfüg- und wieder trennbar ist. Die mechanischen Kupplungen sorgen dafür, dass das Lastmodul an dem Hauptmodul gehalten wird und/oder dass das Hauptmodul an dem Lastmodul gehalten wird. Dies vermeidet es, dass alle Lastmodule und das Hauptmodul einzeln an einer separaten Trägerstruktur befestigt werden müssen. Weiter bevorzugt weisen alle Lastmodule und das Hauptmodul Befestigungsmittel auf, welche eine Befestigung an einer externen Trägerstruktur, beispielsweise auch einer Wand ermöglichen. Dabei ist es bevorzugt, dass zur Befestigung nicht alle Befestigungsmittel genutzt werden müssen, da über die mechanischen Kupplungen beispielsweise ein Lastmodul mit dem Hauptmodul bevorzugt tragend verbunden wird.

Weiter bevorzugt weist das zumindest eine Lastmodul an einem zweiten Längsende zumindest eine zweite mechanische Kupplung auf, welche lösbar mit einer ersten mechanischen Kupplung an einem ersten Längsende eines zweiten Lastmoduls verbindbar ist. Dabei ist die zweite mechanische Kupplung bevorzugt identisch zu der mechanischen Kupplung an dem Hauptmodul ausgebildet. So können alle Lastmodule gleich ausgebildet sein und entweder mit dem Hauptmodul oder mit einem angrenzenden Lastmodul mechanisch verbunden werden.

Die mechanischen Kupplungen zwischen dem Hauptmodul und einem angrenzenden Lastmodul bzw. zwischen einzelnen Lastmodulen stellen darüber hinaus sicher, dass die beschriebenen hydraulischen und elektrischen Kupplungen sicher in Eingriff gehalten werden.

Gemäß einer weiteren bevorzugten Ausführungsform ist zumindest derjenige Teil des Lastmoduls, in welchem der Abschnitt der Zulaufleitung, der Abschnitt der Rücklaufleitung sowie der Zulauf- und der Rücklaufanschluss gelegen sind, als einstückiges Bauteil, vorzugsweise aus einem Kunststoff, ausgebildet. Ein solches Bauteil kann kostengünstig im Spritzgussverfahren gefertigt werden. Bevorzugt werden lediglich die elektrischen bzw. elektronischen Bauelemente, die Reguliereinrichtungen, insbesondere in Form von Regulierventilen, sowie Dichtungen in ein solches einstückig gefertigtes Bauteil eingesetzt. Besonders bevorzugt sind auch die mechanischen Kupplungen sowie die hydraulischen Kupplungen sowie die tragenden Elemente der elektrischen Kupplungen ebenfalls einstückig mit den beschriebenen Teilen des Lastmoduls, vorzugsweise aus Kunststoff gefertigt. Bei dem Hauptmodul ist vorzugsweise derjenige Teil, welcher mit einem angrenzenden Lastelement in Eingriff tritt, d. h. die elektrischen, hydraulischen und mechanischen Kupplungen trägt, einstückig aus Kunststoff gefertigt. Besonders bevorzugt sind diese Teile einstückig mit einem Pumpengehäuse für eine in dem hydraulischen Verteiler angeordnete Umwälzpumpe gefertigt.

Ferner ist es möglich, mehrere hydraulische Verteiler gemäß der vorangehenden Beschreibung miteinander zu kombinieren. So könnte beispielsweise als erste Anordnung ein erster hydraulischer Verteiler mit einem Hauptmodul und mehreren Lastmodulen vorgesehen sein und zumindest eine weitere Anordnung von mehreren Lastmodulen vorgesehen sein, welche von der ersten Anordnung räumlich beabstandet ist und über geeignete Rohrleitungen mit der ersten Anordnung verbunden ist. Eine elektrische Verbindung könnte dabei über ein Verbindungskabel erfolgen. Alternativ könnte für die zweite Anordnung von Lastmodulen eine eigene Energieversorgung und ein Kommunikationsmodul zur drahtlosen Kommunikation mit der Verteiler- Steuereinrichtung in dem Hauptmodul vorgesehen sein. Auch ist es denkbar, in der zweiten Anordnung von Lastmodulen eingangsseitig ein Mischermodul vorzusehen, über welches eine Temperatureinstellung der Vorlauftemperatur für die zweite Anordnung von zweiten Lastmodulen unabhängig von der Vorlauftemperatur für die erste Anordnung von Lastmodulen möglich ist. Dabei wird dieses Mischmodul vorzugsweise ebenfalls von der Verteiler-Steuereinrichtung in dem Hauptmodul angesteuert.

Nachfolgend wird die Erfindung beispielhaft anhand der beigefügten Figuren beschrieben, in diesen zeigt:
Fig. 1 einen hydraulischen Verteiler gemäß der Erfindung im nicht zusammengesetzten Zustand,
Fig. 2 schematisch den hydraulischen Verteiler gemäß Fig. 1 im zusammengesetzten Zustand,
Fig. 3 eine perspektivische Ansicht eines Hauptmoduls des erfindungsgemäßen hydraulischen Verteilers,
Fig. 4 eine schematische Ansicht eines Lastmoduls des erfindungsgemäßen hydraulischen Verteilers,
Fig. 5 eine perspektivische Ansicht des hydraulischen Verteilers mit dem Hauptmodul gemäß Fig. 3 und dem Lastmodul gemäß Fig. 4,
Fig. 6 eine Draufsicht auf den hydraulischen Verteiler gemäß Fig. 5,
Fig. 7 schematisch einen hydraulischen Verteiler gemäß der Erfindung,

- Fig. 8: eine Draufsicht auf einen hydraulischen Verteiler gemäß der Erfindung,
- Fig. 9: eine perspektivische Ansicht des hydraulischen Verteilers gemäß Fig. 2,
- Fig. 10: eine perspektivische Ansicht des Hauptmoduls des Verteilers gemäß Figuren 2 und 3,
- Fig. 11: eine perspektivische Ansicht des Lastmoduls des hydraulischen Verteilers gemäß Figuren 2 und 3,
- Fig. 12: schematisch den modularen Aufbau des hydraulischen Verteilers gemäß Figuren 2 und 3 im nicht zusammengesetzten Zustand, und
- Fig. 13: schematisch den Aufbau des hydraulischen Verteilers gemäß Figur 6 im zusammengefügten Zustand.

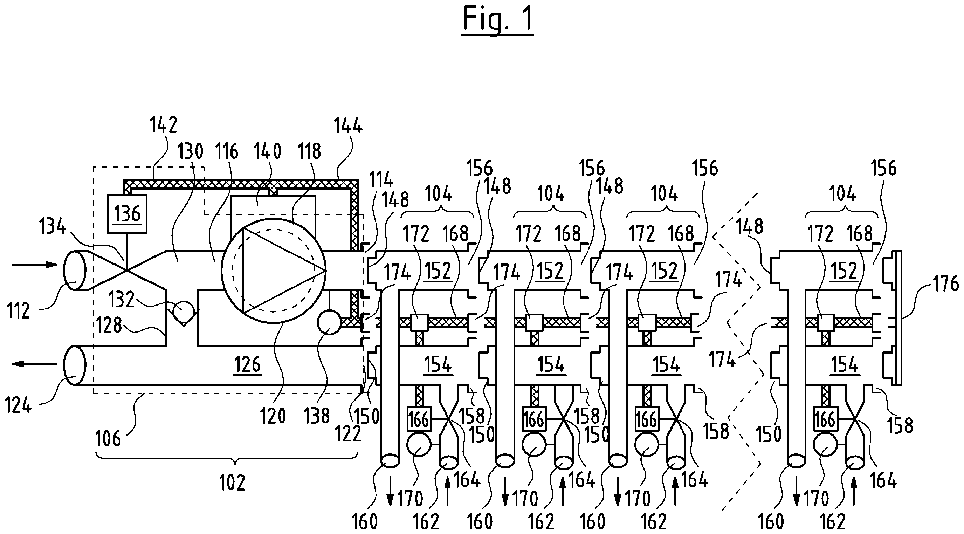

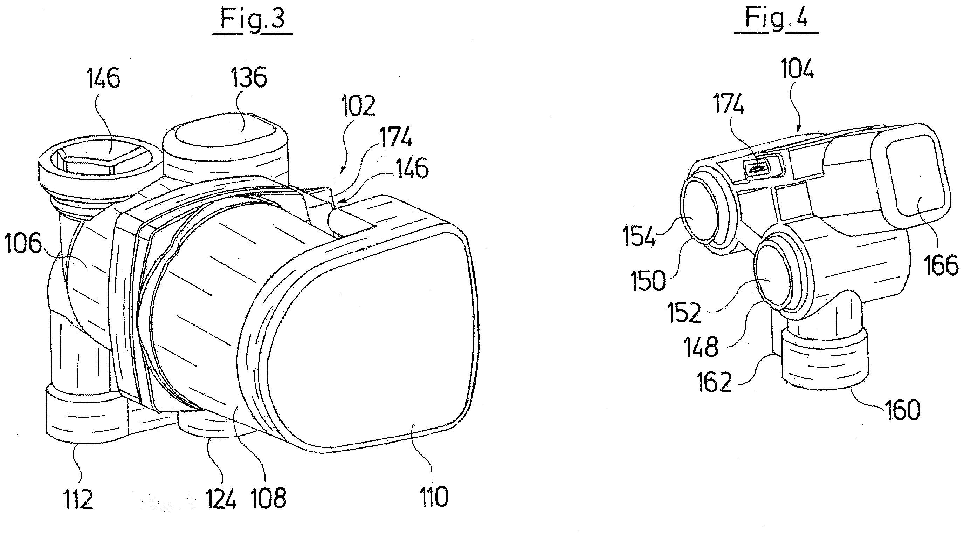

Der in den Figuren 1 - 6 gezeigte hydraulische Verteiler ist modular aufgebaut und besteht im Wesentlichen aus zwei Arten von Modulen, einem Hauptmodul 102 sowie mehreren Lastmodulen 104. Das Hauptmodul 102 ist im Wesentlichen von einem Pumpenaggregat gebildet. Wie in Fig. 3 gezeigt, weist das Pumpenaggregat ein Pumpengehäuse 106 mit einem daran angeordneten Statorgehäuse 108 auf. In dem Pumpengehäuse 106 sind die erforderlichen Strömungswege sowie ein Aufnahmeraum 120 für ein Laufrad 118 ausgebildet. Das Laufrad 118 wird von einem elektrischen Antriebsmotor angetrieben, welcher in dem Motor- bzw. Statorgehäuse 108 angeordnet ist. Dabei ist der elektrische Antriebsmotor vorzugsweise als nasslaufender Motor ausgebildet. An der Außenseite des Statorgehäuses 108 ist am axialen Ende ein Elektronikgehäuse 110 angeordnet, in welchem unter anderem die elektronischen Bauteile zur Steuerung bzw. Regelung des elektrischen Antriebsmotors in dem Statorgehäuse 108 untergebracht sind.

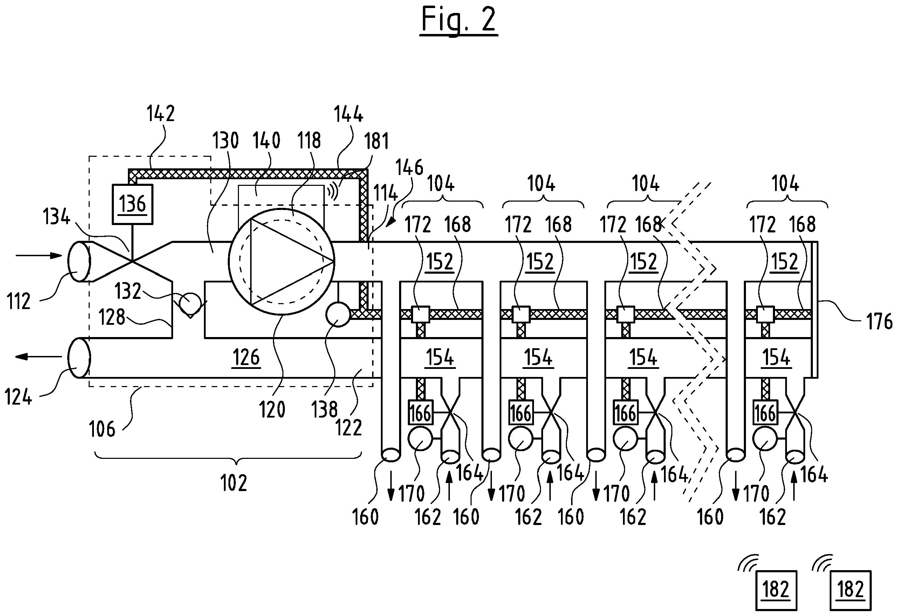

Das in Fig. 3 gezeigte Umwälzpumpenaggregat bildet das Hauptmodul 102. Bei diesem Umwälzpumpenaggregat sind in dem Pumpengehäuse 106 neben dem Laufrad die Komponenten einer Mischeinrichtung, deren Funktion anhand der Figuren 1 und 2 beschrieben wird, untergebracht. Das Pumpengehäuse weist einen ersten Einlass 112 sowie einen ersten Auslass 114 auf. In einem ersten Strömungsweg 116 zwischen dem ersten Einlass 112 und dem ersten Auslass 114 liegt die Umwälzpumpe mit dem Laufrad 118. Das Laufrad 118 liegt in einem Aufnahmeraum 120 im Inneren des Pumpengehäuses 106, welches in den Figuren 1 und 2 als gestrichelte Linie schematisch dargestellt ist. Das Laufrad 118 fördert angetrieben durch den Antriebsmotor ein als Wärmeträger fungierendes Fluid, d. h. eine Flüssigkeit von dem ersten Einlass 112 zu dem ersten Auslass 114.

Das Pumpengehäuse 106 weist darüber hinaus einen zweiten Einlass 122 sowie einen zweiten Auslass 124 auf. Der zweite Einlass 122 ist mit dem zweiten Auslass 124 über einen Kanal 126, welcher einen Strömungsweg im Inneren des Pumpengehäuses 106 bildet, verbunden. Der Kanal 126 führt nicht durch das Laufrad 118, sondern erstreckt sich separat in dem Pumpengehäuse 106. Der Kanal 126 ist über eine Verbindung 128 mit einem Mischbereich bzw. Mischpunkt 130 in dem Strömungsweg 116 verbunden. An dem Mischpunkt 130 werden die Fluidströmungen von dem ersten Einlass 112 und dem zweiten Einlass 122 gemischt. Da das Laufrad 118 stromabwärts des Mischpunktes 130 gelegen ist, saugt es Fluid sowohl aus dem ersten Einlass 112 als auch über die Verbindung 128 aus dem Kanal 126 und damit dem zweiten Einlass 122 an. In der Verbindung 128 ist ein Rückschlagventil 132 angeordnet, welches eine Strömung nur in der Richtung von dem Kanal 126 zu dem Mischpunkt 130 zulässt.

In dem Strömungsweg von dem ersten Einlass 112 zu dem Mischpunkt 130 ist ein Regulierventil 134 angeordnet. Dies ist über einen elektrischen Antriebsmotor 136 in seinem Öffnungsgrad einstellbar. Das Regulierventil 134 fungiert als Mischventil, um das Mischungsverhältnis der zwei genannten Strömungen an dem Mischpunkt 130 einstellen zu können. Wenn das Regulierventil 134 geschlossen ist, kann keine Strömung von dem ersten Einlass 112 zu dem Mischpunkt 130 erfolgen und die Umwälzpumpe saugt über deren Laufrad 118 Fluid ausschließlich über den zweiten Einlass 122 durch den Kanal 126 und die Verbindung 128 an. Wenn das Regulierventil 134 geöffnet wird, wird ein Teil der Strömung durch das Pumpenaggregat durch den ersten Einlass 112 angesaugt, sodass in dem Mischpunkt 130 eine Strömung aus dem ersten Einlass 112 mit einer Strömung aus dem zweiten Einlass 122 gemischt wird. Je nach Öffnungsgrad des Regulierventils 134 ändert sich das Mischungsverhältnis. Wenn nun der erste Einlass 112 an einen Zulauf eines Heizungssystems angeschlossen ist, durch welchen heißes Fluid zugeführt wird und der zweite Einlass 122 an einen Rücklauf zumindest eines Lastkreises angeschlossen ist, wird durch den zweiten Einlass 122 kälteres Fluid zugeführt und zugemischt. Durch die Zumischung des kälteren Fluids aus dem zweiten Einlass 122 zu dem wärmeren Fluid aus dem ersten Einlass 112 ist es somit möglich, die Vorlauftemperatur des aus dem ersten Auslass 114 stromabwärts des Mischpunktes 130 austretenden Fluids gegenüber der Temperatur des in den ersten Einlass 112 eintretenden Fluids zu reduzieren. Die tatsächlich erreichte Vorlauftemperatur an dem ersten Auslass 114 wird über einen Temperatursensor 138, welcher ebenfalls in das Umwälzpumpenaggregat bzw. dessen Pumpengehäuse 106 integriert ist, erfasst. Es ist zu verstehen, dass das Regulierventil 134 anstatt in dem Strömungsweg zwischen dem ersten Einlass 112 und dem Mischpunkt 130 auch in entsprechender Weise zwischen dem zweiten Auslass 124 und dem Abzweig der Verbindung 128 von dem Kanal 126 angeordnet werden könnte.

Für den Fall, dass der gezeigte hydraulische Verteiler für ein Kühlsystem verwendet wird, kann durch den ersten Einlass 112 ein kaltes Fluid zugeführt werden, während über den zweiten Einlass 122 aus dem Rücklauf eines Lastkreises wärmeres Fluid zugeführt wird. So ist es durch die Zumischung dieses wärmeren Fluids an dem Mischpunkt 130 möglich, die Vorlauftemperatur des zugeführten kalten Fluids zu erhöhen. Durch die Einstellung des Mischungsverhältnisses kann auch hier die Temperatur auf eine gewünschte Solltemperatur eingestellt werden.

Die Regelung bzw. Steuerung dieser Mischeinrichtung, d. h. die Temperaturregelung wird von einer Steuereinrichtung 140 übernommen, welche in dem Elektronikgehäuse 110 des Umwälzpumpenaggregates 102 angeordnet ist. Die Steuereinrichtung 140 steuert den Motor 136 des Regulierventils 134 an, sodass dieses einen von der Steuereinrichtung 140 vorgegebenen Öffnungsgrad einnimmt. Dazu ist der Motor 136 des Regulierventils 134 über eine Signalverbindung 142, welche beispielsweise als Datenbus ausgebildet sein kann, mit der Steuereinrichtung 140 verbunden. Auch der Temperatursensor 138 ist über eine Signalverbindung 144 mit der Steuereinrichtung 140 verbunden. So kann die Steuereinrichtung 140 durch Einstellung des Regulierventiles 134 die Zumischung des Fluids aus dem Rücklauf an dem Mischpunkt 130 regulieren und so eine gewünschte Vorlauftemperatur einstellen, wobei über den Temperatursensor 138 eine entsprechende Rückmeldung an die Steuereinrichtung 140 erfolgt, welche eine Temperaturregelung ermöglicht.

Alle die in den Figuren 1 und 2 gezeigten und beschriebenen hydraulischen Komponenten der Mischeinrichtung sowie das Laufrad 118 des Umwälzpumpenaggregates sind in dem Pumpengehäuse 106 angeordnet. Das Pumpengehäuse 106 ist mit allen seinen Teilen, in denen die beschriebenen Strömungswege ausgebildet sind, vorzugsweise einstückig aus Kunststoff gefertigt. So kann eine sehr einfache Verbindung zwischen der beschriebenen Mischeinrichtung und den Komponenten der Umwälzpumpe erreicht werden, da alle Komponenten in ein einstückiges Gehäuse 106 integriert sind. Dadurch wird ein sehr kompakter Aufbau bei gleichzeitig einfacher Montage erreicht. In dem Pumpengehäuse 106 ist zusätzlich ein Entlüftungsventil 146 angeordnet, welches in Figuren 1 und 2 nicht dargestellt ist.

Die zuvor beschriebene Mischeinrichtung dient in dem hier gezeigten Beispiel des hydraulischen Verteilers als Mischeinrichtung für eine Fußbodenheizung. Der hydraulische Verteiler ist als Verteiler für eine Fußbodenheizungsanlage ausgestaltet. Die Mischeinrichtung dient somit dazu, die Temperatur eines Heizmediums auf die für die Fußbodenheizung erforderliche Temperatur abzusenken. Dies erfolgt durch Zumischung des kälteren Fluids aus dem Rücklauf, wie es vorangehend beschrieben wurde.

Der hier gezeigte hydraulische Verteiler, welcher zur Verwendung als Verteiler für ein Fußbodenheizungssystem vorgesehen ist, ist darüber hinaus modular aufgebaut. An einer Seite 146 des Hauptmoduls 102, d. h. des Umwälzpumpenaggregates 102, sind der erste Auslass 114 sowie der zweite Einlass 122 als hydraulische Kupplungen ausgebildet, in welche eine Zulaufkupplung 148 sowie eine Rücklaufkupplung 150 des Lastmoduls 104, welches angrenzend an das Hauptmodul 102 angeordnet ist, eingreifen. In dem Lastmodul 104 sind ein Abschnitt einer Zulaufleitung 152 sowie ein Abschnitt einer Rücklaufleitung 154 ausgebildet. Der Abschnitt der Zulaufleitung 152 verbindet die erste Zulaufkupplung 148 mit einer am entgegengesetzten Längsende des Lastmoduls 104 gelegenen zweiten Zulaufkupplung 156. Entsprechend verbindet der Abschnitt der Rücklaufleitung 154 die erste Rücklaufkupplung 150 mit einer am entgegengesetzten Längsende des Lastmoduls 104 gelegenen zweiten Rücklaufkupplung 158. Die erste Zulaufkupplung 148 sowie die erste Rücklaufkupplung 150 sind als männliche Kupplungsteile ausgebildet, welche in die zweite Zulaufkupplung 156 sowie zweite Rücklaufkupplung 158, welche als weibliche Kupplungsteile ausgebildet sind, eines angrenzenden Lastmoduls 104 eingreifen können, um eine fluidleitende Verbindung zwischen aneinander angrenzenden Abschnitten 152 der Zulaufleitung sowie aneinander angrenzenden Abschnitten der Rücklaufleitung 154 zu bilden. Der erste Auslass 114 an dem Hauptmodul 102 ist entsprechend der zweiten Zulaufkupplung 156 als weibliche Kupplung ausgebildet, sodass die erste Zulaufkupplung 148 des angrenzenden Lastmoduls 104 in fluidleitende Verbindung mit dem ersten Auslass 114 treten kann. Entsprechend ist der zweite Einlass 122 ebenfalls als weibliche hydraulische Kupplung ausgebildet, deren Ausgestaltung derjenigen der zweiten Rücklaufkupplung 158 entspricht, sodass die erste Rücklaufkupplung 150 des angrenzenden Lastmoduls 140 zur Herstellung einer hydraulischen Verbindung mit dem zweiten Einlass 122 in Eingriff treten kann.

Der Abschnitt der Zulaufleitung 152 jedes Lastmoduls weist einen Zulaufanschluss 160 auf. Ferner weist in jedem Lastmodul der Abschnitt der Rücklaufleitung 154 einen Rücklaufanschluss 162 auf. An dem Zulaufanschluss 160 jedes Lastmoduls 104 wird der Eingang eines Lastkreises und an den Rücklaufanschluss 162 jedes Lastmoduls 104 der Ausgang des zugehörigen Lastkreises angeschlossen. Die Lastkreise bilden hier jeweils einzelne Kreise einer Fußbodenheizungsanlage, wobei jeder Kreis vorzugsweise einen Raum beheizt.

In jedem Lastmodul 104 ist darüber hinaus zwischen dem Rücklaufanschluss 162 und dem Abschnitt der Rücklaufleitung 154 im Strömungsweg ein Regulierventil 164 angeordnet. Jedes Regulierventil 162 weist einen elektrischen Antriebsmotor 166 auf, durch welchen das zugehörige Regulierventil 164 in seinem Öffnungsgrad verstellbar ist. Die Regulierventile 164 sind darüber hinaus so ausgebildet, dass sie vollständig geschlossen werden können. Durch dieses vollständige Schließen ist es möglich den angeschlossenen Lastkreis zu unterbrechen bzw. abzuschalten. Ist das Regulierventil 164 geöffnet, lässt sich durch Verändern des Öffnungsgrades über den Antriebsmotor 166 der Durchfluss bzw. Volumenstrom durch den Lastkreis, welcher an den Zulaufanschluss 160 bzw. an den Rücklaufanschluss 162 angeschlossen ist, regulieren. Da in jedem Lastmodul eine derartige Reguliereinrichtung mit einem Regulierventil 164 angeordnet ist, lässt sich für jeden Lastkreis im Betrieb der Anlage der Durchfluss variieren und an den jeweiligen Betriebszustand, insbesondere den Energiebedarf des Lastkreises anpassen. Die Antriebsmotoren 166 sind über eine elektrische Verbindung 168 in jedem Lastmodul 104, welche der Energieversorgung und der Datenübertragung dient, mit der Steuereinrichtung 140, welche als Verteiler-Steuereinrichtung fungiert, verbunden. In den Lastmodulen 104 ist darüber hinaus jeweils ein Temperatursensor 104 in dem Strömungsweg zwischen dem Rücklaufanschluss 152 und dem Abschnitt 154 der Rücklaufleitung angeordnet. Der Temperatursensor 170 erfasst die Rücklauftemperatur am Ausgang des angeschlossenen Lastkreises. Die Temperatursensoren 170 sind jeweils ebenfalls mit der elektrischen Verbindung 168, welche einen Datenbus aufweist bzw. bildet, verbunden.

Zur Datenübertragung bzw. Kommunikation mit der Steuereinrichtung 140 weisen die Lastmodule 104 jeweils eine Modulsteuereinrichtung 172 auf. Die Modulsteuereinrichtungen 172 ermöglichen eine Adressierung der einzelnen Lastmodule 104 von der Steuereinrichtung 140. Die Steuereinrichtung 140 und die Modulsteuereinrichtung 172 sind vorzugsweise zur automatischen Kopplung ausgebildet. So weist die Steuereinrichtung 140 bevorzugt den Modulsteuereinrichtungen 172 und damit den zugehörigen Lastmodul 104 jeweils eine Adresse zu, sodass die Steuereinrichtung 140 zum einen gezielt Daten von dem jeweiligen Lastmodul 104, beispielsweise Temperaturwerte von dem Temperatursensor 170, erfassen kann und gleichzeitig gezielt den Antriebsmotor 166 zur Einstellung des Regulierventils 164 ansteuern kann. Bevorzugt wird für jedes Lastmodul 104 von der Steuereinrichtung 140 der Durchfluss durch den angeschlossenen Lastkreis über das Regulierventil 164 in Abhängigkeit der Temperaturdifferenz zwischen den Temperatursensoren 138 und 170 eingestellt, sodass die Temperaturdifferenz einen konstanten vorgegebenen Wert annimmt. Zur Herstellung der elektrischen Verbindung bzw. der Datenverbindung zwischen den einzelnen Lastmodulen 104 sind elektrische Steckkupplungen 174 zwischen den einzelnen Lastmodulen 104 vorgesehen. Dazu sind entsprechende Teile der elektrischen Steckkupplungen 174 an entgegengesetzten Längsenden der Lastmodule 104 vorgesehen, welche jeweils mit der elektrischen Steckkupplung 174 eines angrenzenden Lastmoduls 104 in Eingriff treten können. Entsprechend ist eine elektrische Steckkupplung 174 zwischen dem Hauptmodul 102 und dem angrenzenden Lastmodul 104 vorhanden.

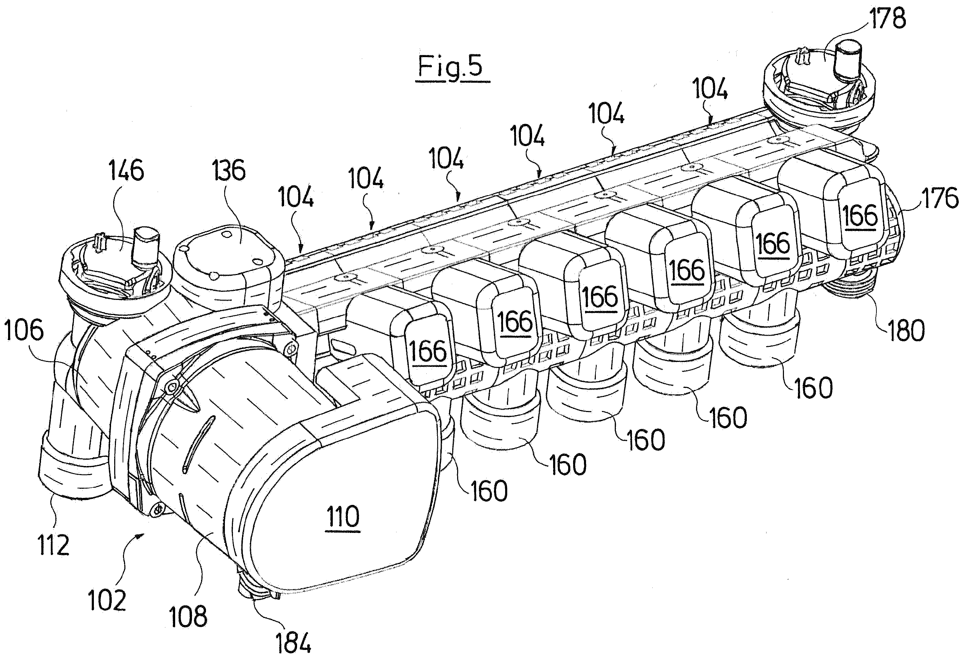

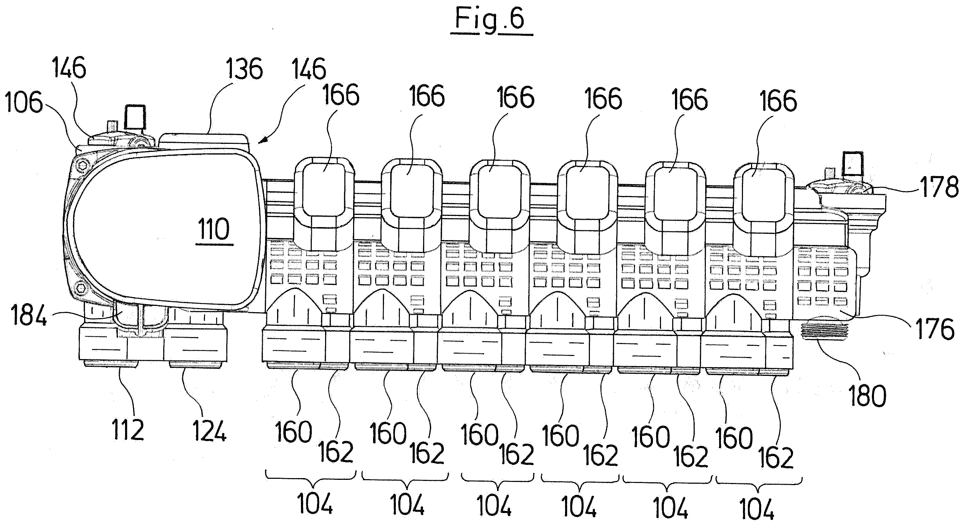

Durch die Ausgestaltung der elektrischen und hydraulischen Kupplungen zwischen den Lastmodulen 104 sowie zwischen dem Lastmodul 104 und dem Hauptmodul 102 ist es möglich, eine gewünschte Anzahl von Lastmodulen 104 mit dem Hauptmodul 102 zu verbinden, je nachdem wie viel Lastkreise angeschlossen werden sollen. So ist eine flexible Anpassung an verschiedene Heizungs- bzw. Kühlsysteme möglich und es ist nicht erforderlich jeweils für bestimmte Anzahlen von Lastkreisen vorgefertigte Verteiler bereitzuhalten. Vielmehr kann ein hydraulischer Verteiler der gewünschten Größe sehr einfach durch das Zusammenstecken der entsprechenden Zahl von Lastmodulen 104 aufgebaut werden, wie es in Figur 2 gezeigt ist. Das letzte, dem Hauptmodul 102 abgewandte Lastmodul 104 wird dabei an seinem freien, d. h. dem letzten angrenzendem Lastmodul 104 abgewandten Ende durch ein Endstück 176 abgeschlossen. Das Endstück 176 dient insbesondere dem Verschluss der zweiten Zulaufkupplung 156 sowie der zweiten Rücklaufkupplung 158 am Ende, sodass der Abschnitt der Zulaufleitung 152 und der Abschnitt der Rücklaufleitung 154 am freien Ende nach außen abgedichtet wird. In dem in Figur 6 gezeigten Beispiel weist das Endstück 176 darüber hinaus noch ein Entlüftungsventil 178 sowie einen Anschluss 180 auf, welcher mit der Rücklaufleitung 154 verbunden ist und beispielsweise zum Befüllen oder zum Spülen genutzt werden kann. Im normalen Betrieb ist dieser Anschluss 180 verschlossen. In den in Figuren 5 und 6 gezeigten Beispielen sind sechs Lastmodule 104 für sechs Lastkreise an das Hauptmodul 102 angefügt.

Neben den beschriebenen hydraulischen und elektrischen Verbindungen wird auch eine mechanische Verbindung zwischen den Lastmodulen 104 sowie zwischen dem ersten Lastmodul 104 und dem Hauptmodul 102 hergestellt. Die mechanische Verbindung wird in diesem Beispiel durch das Ineinandergreifen der hydraulischen Kupplungen, d. h. der ersten Zulaufkupplung 148, mit der zweiten Zulaufkupplung 156 sowie der ersten Rücklaufkupplung 150 mit der zweiten Rücklaufkupplung 158, hergestellt. Es ist jedoch zu verstehen, dass hier zusätzliche Rast- oder Sicherungselemente vorgesehen sein können, um eine feste mechanische Verbindung zwischen den einzelnen Modulen 102, 104 herzustellen.

Wenn die Module 102, 104 aneinandergefügt sind, bilden die Abschnitte der Zulaufleitung 152 der einzelnen Lastmodule 104, wie in Figur 2 zu sehen ist, eine durchgehende Zulaufleitung 152, während die Abschnitte der Rücklaufleitung 154 eine durchgehende Rücklaufleitung 154 bilden. Die Steuereinrichtung 140 bildet eine zentrale Verteiler-Steuereinrichtung, welche sowohl die Umwälzpumpe, d. h. deren Antriebsmotor 108, steuert bzw. regelt, insbesondere eine Drehzahlregelung für den Antriebsmotor 108 vornimmt, als auch die Mischeinrichtung durch Ansteuerung des Regulierventils 134 regelt. Darüber hinaus dient die Steuereinrichtung 140 hier als zentrale Steuereinrichtung für die Regulierventile 154 in sämtlichen Lastkreisen 104. In diesen bewirkt sie, wie oben beschrieben, eine Durchflussregelung und dient zum Ein- und Ausschalten der einzelnen Lastkreise. Dazu weist die Steuereinrichtung 140 eine Kommunikationsschnittstelle bzw. eine Kommunikationseinrichtung 181 auf, welche eine Kommunikation mit externen Raumthermostaten 182, in diesem Beispiel über Funk, ermöglicht. In Figur 2 sind nur zwei Raumthermostate 182 gezeigt. Es ist jedoch zu verstehen, dass vorzugsweise für jeden zu temperierenden Raum ein Raumthermostat 182 vorgesehen ist. An dem Raumthermostat 182 kann eine gewünschte Raumtemperatur eingestellt werden. Wenn die tatsächliche Raumtemperatur vom eingestellten Sollwert abweicht, sendet der Raumthermostat 182 ein Signal zu der Kommunikationsschnittstelle 181 der Steuereinrichtung 140, welche daraufhin veranlasst, einen zu dem Raumthermostat 182 zugehörigen Lastkreis durch Öffnen des zugehörigen Regulierventils 164 einzuschalten. Wird eine gewünschte Raumtemperatur erreicht, sendet der Raumthermostat 182 wiederum ein Signal, woraufhin die Steuereinrichtung 140 das zu diesem Lastkreis zugehörige Regulierventil 164 über den Antriebsmotor 166 schließt und damit den Lastkreis, welcher durch den zugehörigen Raum führt, abschaltet.

An dem Elektronikgehäuse 110 ist darüber hinaus ein elektrischer Anschluss 184 ausgebildet, welcher dem elektrischen Anschluss des gesamten hydraulischen Verteilers und all seiner elektrischen Komponenten dient. Der elektrische Anschluss 184 ist hier als Stecker ausgebildet, an welchem eine Netzleitung angeschlossen werden kann. Vorzugsweise ist in dem Elektronikgehäuse 110 ein Netzteil integriert und über die elektrischen Verbindungen 168 zu den Lastmodulen 104 werden lediglich Kleinspannungen übertragen.

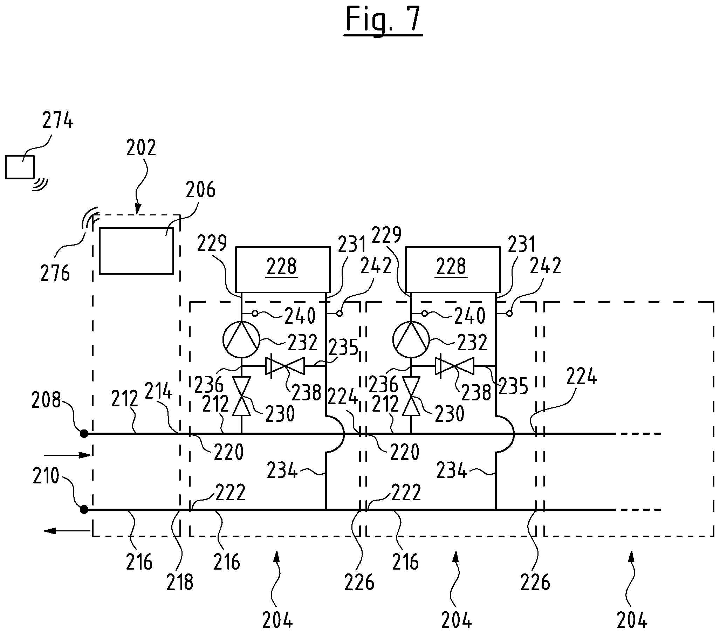

Auch der in Fig. 7 bis 13 als zweites Ausführungsbeispiel gezeigte hydraulische Verteiler ist modular aufgebaut. Er weist ein Hauptmodul 202 sowie mehrere Lastmodule 204 auf. Das Hauptmodul 202 dient dem hydraulischen und elektrischen Anschluss der Lastmodule 204 und weist eine Steuereinrichtung 206 auf, welche als Verteiler-Steuereinrichtung zur Steuerung der mehreren Lastmodule 204 dient. Das Hauptmodul 202 weist darüber hinaus einen Zulaufanschluss 208 sowie einen Rücklaufanschluss 210 auf. Mit dem Zulaufanschluss 208 und dem Rücklaufanschluss 210 wird das Hauptmodul 202 an eine Heizungs- oder Kühlanlage angeschlossen. Dabei wird durch Zulaufanschluss 208 temperiertes Fluid zugeführt, welche nach Durchströmen eines oder mehrerer Lastkreise durch den Rücklaufanschluss 210 zurück in die Heizungs- oder Kühlanlage fließt. In dem Hauptmodul 202 können an dem Abschnitt der Zulaufleitung 212 und/oder dem Abschnitt der Rücklaufleitung 216 jeweils ein Temperatursensor angeordnet sein, welche die Zulauf- und die Rücklauftemperatur erfassen. Diese Sensoren können mit der Verteiler-Steuereinrichtung 206 signalverbunden sein. So kann die Verteiler-Steuereinrichtung 206 direkt die Temperaturen im Hauptmodul erfassen.

Nachfolgend wird der hydraulische Verteiler gemäß Fig. 7 bis 13 weiter anhand des Beispiels einer Heizungsanlage beschrieben. Es ist jedoch zu verstehen, dass der hydraulische Verteiler entsprechend auch in einer Kühlanlage oder in einer kombinierten Heizungs- bzw. Kühlanlage Verwendung finden könnte. In einer Heizungsanlage wird dem Zulaufanschluss 208 erwärmtes Fluid, insbesondere erwärmtes Wasser, beispielsweise von einem Heizkessel oder Wärmespeicher zugeführt. Durch den Rücklaufanschluss 210 fließt das Fluid nach dem Durchströmen der Wärmetauscher in den zu erwärmenden Räumen oder Objekten zurück zu dem Heizkessel bzw. dem Wärmespeicher.

Der Zulaufanschluss 208 ist im Inneren des Hauptmoduls 202 durch einen Abschnitt einer Zulaufleitung 212 mit einem Auslass 214 verbunden. Entsprechend ist der Rücklaufanschluss 210 über einen Abschnitt einer Rücklaufleitung 216 im Inneren des Hauptmoduls 202 mit einem Einlass 218 verbunden. Der Auslass 214 und der Einlass 218 sind als hydraulische Kupplungen an einer Seite des Hauptmoduls 202 ausgebildet, welche einem angrenzenden Lastmodul 204 zugewandt sind. Die Lastmodule 204 weisen in ihrem Inneren ebenfalls jeweils einen Abschnitt einer Zulaufleitung 212 und einen Abschnitt einer Rücklaufleitung 216 auf. Die Abschnitte der Zulaufleitung 212 sowie der Rücklaufleitung 216 erstrecken sich in Längsrichtung durch die Lastmodule 204 hindurch. An einer ersten Seite sind die Abschnitte der Zulaufleitung 212 und der Rücklaufleitung 216 mit ersten hydraulischen Kupplungen verbunden. Dabei ist der Abschnitt der Zulaufleitung 212 an dem ersten Ende mit einer ersten Zulaufkupplung 220 und der Abschnitt der Rücklaufleitung 216 an derselben Seite mit einer ersten Rücklaufkupplung 222 verbunden. Die erste Zulaufkupplung 220 ist mit dem Auslass 214 des Hauptmoduls 202 in Eingriff, während die erste Rücklaufkupplung 222 mit dem Einlass 218 des Hauptmoduls 202 in Eingriff ist, um eine fluidleitende Verbindung herzustellen.

Die Lastmodule 204 weisen an einem der ersten Zulaufkupplung und dem der ersten Rücklaufkupplung 222 entgegengesetzten Längsende eine zweite Zulaufkupplung 224 sowie eine zweite Rücklaufkupplung 226 auf. Die zweite Zulaufkupplung 224 bildet das der ersten Zulaufkupplung 220 entgegengesetzte Axialende des Abschnittes der Zulaufleitung 212 in dem Lastmodul 204, während die zweite Rücklaufkupplung 226 das der ersten Rücklaufkupplung 222 entgegengesetzte Axialende des Abschnittes der Rücklaufleitung 216 in dem Lastmodul 204 bildet. Die mehreren Lastmodule 204 sind alle gleich ausgebildet. Das bedeutet, dass die Ausgestaltung und die Anordnung der zweiten Zulaufkupplung 224 sowie der zweiten Rücklaufkupplung 226 in ihrer Ausgestaltung der Anordnung des Auslasses 214 sowie des Einlasses 218 an dem Hauptmodul 202 entspricht. So wird es möglich, ein Lastmodul 204 entweder an das Hauptmodul 202 oder an ein anderes Lastmodul anzusetzen. So können mehrere Lastmodule in Längsrichtung aneinander gereiht werden. In Fig. 1 ist eine Anordnung von zwei Lastmodulen 204 gezeigt, wobei weitere Lastmodule 204 schematisch angedeutet sind. In dem Ausführungsbeispiel gemäß Figuren 2 und 3 sind sechs Lastmodule 204 an einem Hauptmodul 202 angeordnet.

Wesentliches Merkmal der Lastmodule 204, welche in den Anordnungen gemäß Figuren 7 bis 13 gezeigt sind, ist darüber hinaus, dass jedes Lastmodul 204 eine integrierte Mischeinrichtung zur Temperatureinstellung der Vorlauftemperatur für einen zugehörigen Lastkreis 228 aufweist. Die Mischeinrichtung weist in einem Strömungsweg von der Zulaufleitung 212 zu dem Eingang 229 des Lastkreises 228 ein Regulierventil 230 und stromabwärts von diesem eine Umwälzpumpe 232 auf. Die Umwälzpumpe 232 dient dazu, Fluid von der Zulaufleitung 212 durch den Lastkreis 228 und über den Rücklauf 234 zurück in die Rücklaufleitung 216 zu fördern. Die Mischeinrichtung weist darüber hinaus eine Verbindung von dem Rücklauf 234 zu einem Mischpunkt 236 auf, wobei der Mischpunkt 236 in dem Strömungsweg zwischen dem Regulierventil 230 und der Umwälzpumpe 232 gelegen ist. In der Verbindung 235 ist ein Rückschlagventil 238 gelegen, welches bewirkt, dass eine Strömung durch die Verbindung 235 nur in der Richtung von Rücklauf 234 zu dem Mischpunkt 236 möglich ist.

Das Regulierventil 230 ist zu seiner Ansteuerung mit der Verteiler-Steuereinrichtung 206 signalverbunden. D. h. die Verteiler-Steuereinrichtung 206 steuert das Regulierventil 230 an, um eine gewünschte Vorlauftemperatur am Eingang 229 des Lastkreises 228 einzustellen. Diese Vorlauftemperatur am Eingang 229 wird durch einen Temperatursensor 240 erfasst. Wenn das Regulierventil 230 vollständig geschlossen ist, fördert die Umwälzpumpe 232 Fluid ausschließlich über die Verbindung 235 im Kreislauf durch den Lastkreis 228. Wenn das Regulierventil 230 geöffnet wird, wird von der Umwälzpumpe 232 gleichzeitig ein Fluidstrom aus der Zulaufleitung 212 und ein Fluidstrom aus der Verbindung 235 angesaugt. Dabei wird somit dem Fluid aus der Zulaufleitung 212 Fluid aus dem Rücklauf 234 über die Verbindung 235 zugemischt, sodass die Vorlauftemperatur des Fluids aus der Zulaufleitung 212 geändert wird. Im Falle eines Heizungssystems ist die Vorlauftemperatur in der Zulaufleitung 212 üblicherweise höher als in dem Rücklauf 234, d. h. in diesem Fall wird über die Verbindung 235 der Strömung aus der Zulaufleitung 212 kälteres Fluid aus dem Rücklauf 234 zugemischt, sodass die Zulauftemperatur gesenkt wird. Umgekehrt kann in einem Kühlsystem die Vorlauftemperatur des Fluids aus der Zulaufleitung 212 durch Zumischen wärmeren Fluids aus dem Rücklauf 235 erhöht werden. Durch Veränderung des Öffnungsgerades des Regulierventils 230 kann der Anteil von Fluid, welcher aus der Zulaufleitung 212 dem Mischpunkt 236 zugeführt wird, variiert werden. Bei konstanter Fördermenge der Umwälzpumpe 232 wird entsprechend ein größerer oder kleinerer Anteil des Förderstroms über die Verbindung 235 angesaugt, wodurch die Temperatur des Fluids am Eingang 229 des Lastkreises 228 durch Änderung des Mischungsverhältnisses der beiden Strömungen am Mischpunkt 236 variiert werden kann. Die tatsächlich eingestellte Temperatur wird dabei von dem Temperatursensor 240 erfasst. Der erfasste Temperaturwert wird über eine geeignete Signalverbindung der Verteiler-Steuereinrichtung 206 zur Regelung mitgeteilt. Die Verteiler-Steuereinrichtung 206 regelt auf diese Weise die einzelnen Lastmodule 204 unabhängig, sodass die Vorlauftemperatur für die einzelnen Lastkreise 228 individuell geregelt bzw. eingestellt werden kann.

In diesem Ausführungsbeispiel ist ferner ein zweiter Temperatursensor 242 am Ausgang des Lastkreises 248 angeordnet. Auch dieser ist vorzugsweise mit der Verteiler-Steuereinrichtung 206 signalverbunden und erfasst die Austrittstemperatur aus dem Lastkreis 228. Da so die Ein- und die Austrittstemperatur des Lastkreises 228 erfasst wird, ist es möglich, die Temperaturdifferenz über dem Lastkreis 228 zu bestimmen und beispielsweise den von der Umwälzpumpe 232 geförderten Volumenstrom abhängig von dieser Temperaturdifferenz zu regeln. Dazu wird vorzugsweise auch die Umwälzpumpe 232 über eine geeignete Signalverbindung von der Steuereinrichtung 206 angesteuert, insbesondere um die Drehzahl der Umwälzpumpe 232 einzustellen. Der Durchfluss kann für jeden Lastkreis durch Drehzahländerung der jeweiligen Umwälzpumpe 232 individuell eingestellt werden.

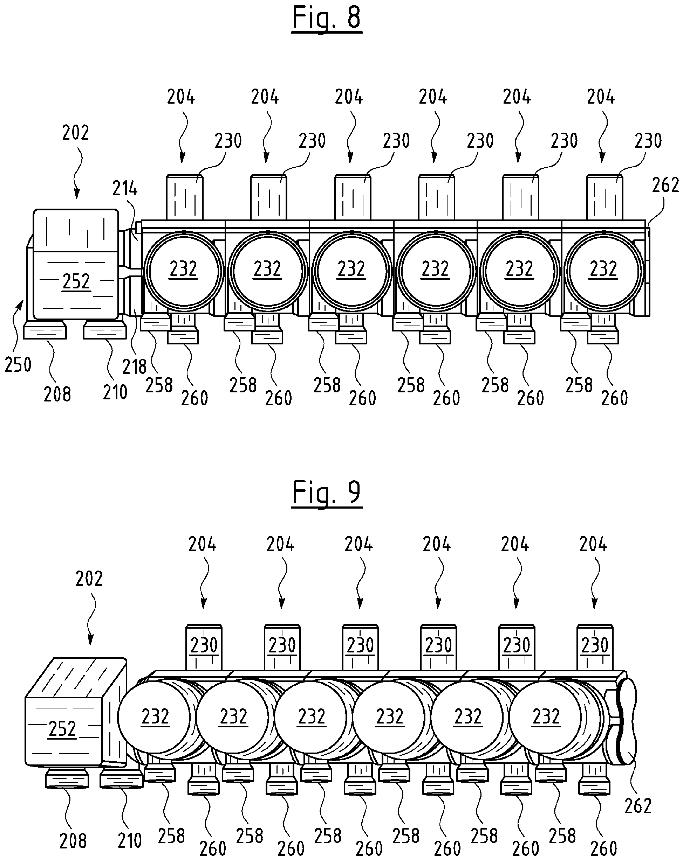

Der konstruktive Aufbau des anhand von Fig. 7 beschriebenen hydraulischen Verteilers wird näher anhand der Figuren 8 bis 13 beschrieben. Das Hauptmodul 202 weist einen Hydraulikabschnitt 250 sowie ein Elektronikgehäuse 252 auf, in welchem die Steuereinrichtung bzw. Verteiler-Steuereinrichtung 206 und gegebenenfalls weitere Komponenten zur Energieversorgung, wie beispielsweise ein Netzteil, angeordnet sind. Der Hydraulikabschnitt 250 ist vorzugsweise als einteiliges Bauteil aus Kunststoff ausgebildet und weist den Zulaufanschluss 208 sowie den Rücklaufanschluss 210 an einer Seite auf. Der Zulaufanschluss 208 sowie der Rücklaufanschluss 210 sind als hydraulische Kupplungen zum Anschluss von Versorgungsleitungen, welche die Verbindung zu einer Heizungs- oder Kühlanlage herstellen, ausgebildet. An einer zweiten Seitenfläche des Hydraulikabschnittes 250 sind der Einlass 218 sowie der Auslass 214 angeordnet. Der Auslass 214 ist mit dem Zulaufanschluss 208 über einen Kanal im Inneren des Hydraulikabschnittes 250 verbunden, während der Einlass 218 mit dem Rücklaufanschluss 210 über einen weiteren Kanal im Inneren des Hydraulikabschnittes 250 verbunden ist. Wie oben beschrieben, sind der Auslass 214 und der Einlass 218 als hydraulische Kupplungen zur steckbaren Anbindung eines Lastmoduls 204 ausgebildet. Dazu greift die erste Zulaufkupplung 220 eines angrenzenden Lastmoduls 204 in den Auslass 214 und eine erste Rücklaufkupplung 220 eines angrenzenden Lastmoduls in den Einlass 218 ein. Der Auslass 214 und der Einlass 218 sind in diesem Beispiel jeweils als weibliche Teile einer Steckkupplung ausgebildet. Entsprechend sind die erste Zulaufkupplung 220 und die erste Rücklaufkupplung 222 jeweils als die männlichen Teile einer hydraulischen Steckkupplung ausgebildet. Durch das Ineinanderstecken der hydraulischen Kupplungen wird gleichzeitig eine mechanische Verbindung zwischen dem Hauptmodul 202 und dem Lastmodul 204 geschaffen. In den Kupplungen sind zur Abdichtung hier nicht näher gezeigte Dichtungen, insbesondere O-Ringe, angeordnet.

Auch das Lastmodul 204 weist einen einstückig aus Kunststoff gefertigten Gehäuseteil auf, welcher als Pumpengehäuse für die Umwälzpumpe 232 dient und in seinem Inneren die erforderlichen Strömungswege und insbesondere die Abschnitte der Zulaufleitung 212 sowie der Rücklaufleitung 216 aufweist. Aus dem Gehäuseteil 254 stehen der Antrieb des Regulierventils 230 sowie das Statorgehäuse 256 der Umwälzpumpe 232 nach außen vor. Der Gehäuseteil 254 weist an einem Längsende die erste Zulaufkupplung 220 und die erste Rücklaufkupplung 222 und an einem entgegengesetzten Längsende die zweite Zulaufkupplung 224 sowie die zweite Rücklaufkupplung 226 auf, wobei die zweite Zulaufkupplung 224 und die zweite Rücklaufkupplung 226 entsprechend dem Auslass 214 und dem Einlass 218 an dem Hauptmodul 202 als weibliche Teile einer hydraulischen Steckkupplung ausgebildet sind. Da die zweite Zulaufkupplung 224 und die zweite Rücklaufkupplung 226 entsprechend dem Auslass 214 und dem Einlass 218 geformt und angeordnet sind, ist es möglich, identisch ausgebildete Lastmodule 204 entweder direkt an das Hauptmodul 202 oder an ein weiteres Lastmodul 204 anzustecken, wobei dann die erste Zulaufkupplung 220 eines zweiten Lastmoduls in die zweite Zulaufkupplung 224 eines ersten Lastmoduls und die erste Rücklaufkupplung 222 eines zweiten Lastmoduls in die zweite Rücklaufkupplung 226 eines ersten Lastmoduls eingreift. So können mehrere Lastmodule aneinandergesteckt werden, um einen hydraulischen Verteiler mit der gewünschten Zahl von Anschlüssen für Lastkreise 228 auszubilden. Die Zahl der Lastmodule 204 wird dabei im Wesentlichen von der Konfiguration der Steuereinrichtung 206 begrenzt. Der Gehäuseteil 254 des Lastmoduls 204 weist darüber hinaus einen Zulaufanschluss 258 und einen Rücklaufanschluss 260 auf. Mit dem Zulaufanschluss 258 wird entsprechend der Eingang 229 eines Lastkreises 228 verbunden, während mit dem Rücklaufanschluss 260 ein Ausgang 231 des Lastkreises 228 verbunden wird.

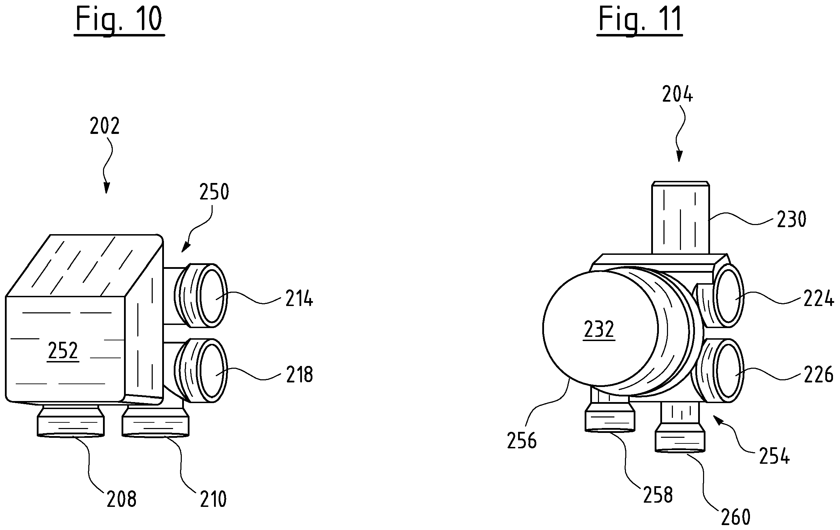

Die Figuren 8 und 9 zeigen die montierte Anordnung von sechs Lastmodulen 204 an dem Hauptmodul 202 wie sie in den Figuren 10 und 11 gezeigt sind. Es ist zu erkennen, dass so ein hydraulischer Verteiler geschaffen wird, welcher sechs Zulaufanschlüsse 256 und sechs Rücklaufanschlüsse 260 für sechs Lastkreise aufweist. Alle sechs Lastmodule 204 sind identisch ausgebildet. Das letzte, d. h. das dem Hauptmodul 202 abgewandte Lastmodul 204, ist an seiner zweiten Zulaufkupplung 224 und seiner zweiten Rücklaufkupplung 226 durch ein Endstück 262 verschlossen.

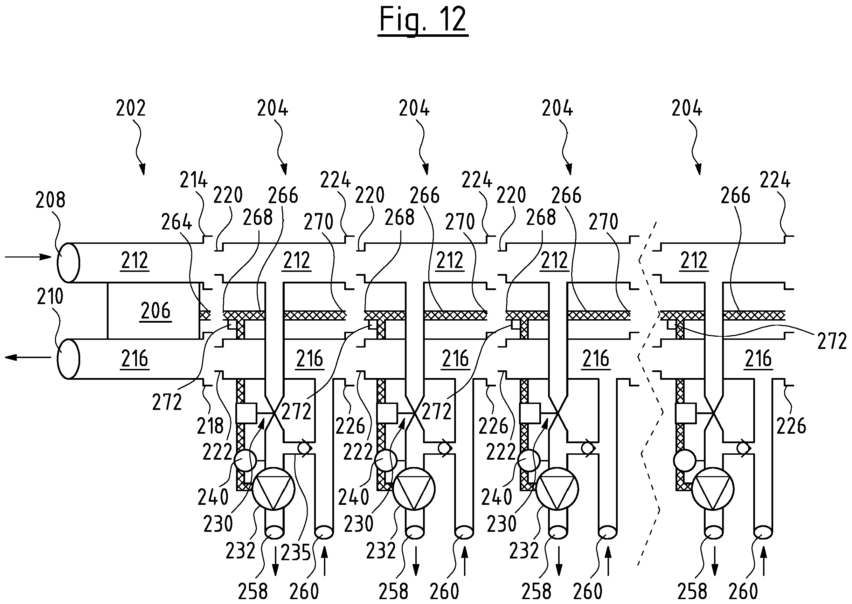

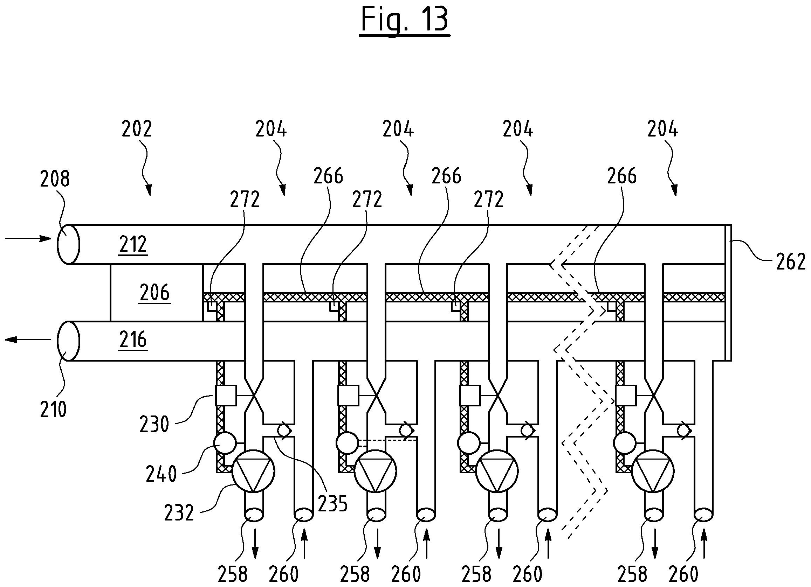

Die Strömungswege des so gekoppelten hydraulischen Verteilers sind in Figur 13 noch einmal näher gezeigt. Figur 12 zeigt den Aufbau gemäß Fig. 13 im nicht zusammengesetzten Zustand der Lastmodule 204. In Figuren 12 und 13 ist schematisch nur die Anordnung von vier Lastmodulen 204 gezeigt.

Neben den beschriebenen hydraulischen Verbindungen und Elementen weisen das Hauptmodul 202 sowie die Lastmodule 204 elektrische bzw. elektronische Bauteile auf. Wie beschrieben, weist das Lastmodul die elektronische Steuereinrichtung 206 auf. Diese ist in dem Hauptmodul 202 mit einem elektrischen Verbindungsstecker 264 verbunden. In jedem der Lastmodule 204 ist eine elektrische Verbindung 266 vorgesehen, welche an einem ersten Axialende in einem elektrischen Verbindungsstecker 268 und am entgegengesetzten Axialende in einem elektrischen Verbindungsstecker 270 endet. Dabei sind die elektrischen Verbindungsstecker 268 und 270 so ausgebildet, dass der elektrische Verbindungsstecker 268 mit dem elektrischen Verbindungsstecker 264 an dem Hauptmodul 202 oder einem elektrischen Verbindungsstecker 270 eines angrenzenden Lastmoduls in Eingriff treten kann, um eine elektrische Kupplung zu bilden und eine elektrische Verbindung zwischen dem Lastmodul 204 und einem angrenzenden Lastmodul 204 oder dem Hauptmodul 202 herzustellen. Mit der elektrischen Verbindung 266, welche als Datenbus ausgebildet ist, sind im Inneren des Lastmoduls 204 jeweils der Antrieb des Regulierventils 230, der Temperatursensor 240 sowie die Umwälzpumpe 232 verbunden. Die elektrische Verbindung 266 dient dabei der Energieübertragung zu diesen Komponenten und darüber hinaus der Signalübertragung zu diesen Komponenten bzw. von diesen Komponenten zu der Verteiler-Steuereinrichtung 206 in dem Hauptmodul 202.

Wenn an ein Lastmodul 204 ein weiteres Lastmodul 204 angesteckt wird, wird mittels der über die Verbindungsstecker 268 und 270 hergestellten elektrischen Verbindung eine Energieversorgung auch dieses nachfolgenden Lastmoduls 204 von dem Hauptmodul 202 sowie eine Datenübertragung von dem Hauptmodul 202 zu diesem weiteren Lastmodul 204 über das oder die dazwischenliegenden Lastmodule 204 hergestellt. Die Adressierung der einzelnen Lastmodule 204 kann über eine Modulsteuereinrichtung 272 in jedem Lastmodul 204 erfolgen. Die Modulsteuereinrichtung 272 dient der Datenkommunikation mit der zentralen Verteiler-Steuereinrichtung 206. Dazu ist jeder Modulsteuereinrichtung 272, d. h. damit jedem Lastmodul 204 eine Adresse zugewiesen. Dies kann automatisiert beim Anschließen des jeweiligen Lastmoduls 204 von der Verteiler-Steuereinrichtung 206 bewirkt werden. Über diese Adresse und die Modulsteuereinrichtung 272 können dann von der Verteiler-Steuereinrichtung 206 das Regulierventil 230 und die Umwälzpumpe 232 in jedem Lastmodul 204 individuell angesteuert werden, um eine Temperatur- und Volumenstromregelung für den angeschlossenen Lastkreis zu bewirken. Das Ausgangssignal des Temperatursensors 240 und gegebenenfalls des Temperatursensors 242 wird über die Modulsteuereinrichtung 272 an die Verteiler-Steuereinrichtung 206 zurückgemeldet und kann dort in die Regelung des jeweiligen Lastmoduls 204 einfließen.

Um eine raumtemperaturabhängige Regelung zu ermöglichen, sind Raumthermostate 274 in den zu temperierenden Räumen vorgesehen (siehe Fig. 7). Die Raumthermostate 274 kommunizieren mit einer Kommunikationsschnittstelle 276 der Steuereinrichtung 206. An den Raumthermostaten 274 kann eine gewünschte Solltemperatur eingestellt werden. Bei Abweichung der tatsächlichen Temperatur von dieser Solltemperatur sendet der Raumthermostat 274 ein entsprechendes Signal an die Kommunikationsschnitte 276 der Steuereinrichtung 206. Diese aktiviert daraufhin den zu dem Raum zugehörigen Lastkreis 228 durch Einschalten der Umwälzpumpe 232 in dem zugehörigen Lastmodul 204. Im Anschluss erfolgt dann die beschriebene Temperatur- sowie Durchflussregelung für den zugehörigen Lastkreis 228. Wird die eingegebene Solltemperatur an dem Raumthermostat 274 erreicht, sendet der Raumthermostat 274 ein korrespondierendes Signal an die Kommunikationsschnittstelle 276 der Steuereinrichtung 206. Diese deaktiviert daraufhin den zugehörigen Lastkreis 228, d. h. schaltet den in dem jeweiligen Raum gelegenen Lastkreis 228 ab, indem die Umwälzpumpe 232 in dem zugehörigen Lastmodul 204 ausgeschaltet wird.

### Bezugszeichenliste

- 102: - Hauptmodul
- 104: - Lastmodul
- 106: - Pumpengehäuse
- 108: - Statorgehäuse
- 110: - Elektronikgehäuse
- 112: - Erster Einlass
- 114: - Erster Auslass
- 116: - Strömungsweg
- 118: - Laufrad
- 120: - Aufnahmeraum
- 122: - Zweiter Einlass
- 124: - Zweiter Auslass
- 126: - Kanal
- 128: - Verbindung
- 130: - Mischpunkt
- 132: - Rückschlagventil
- 134: - Regulierventil
- 136: - Motor
- 138: - Temperatursensor
- 140: - Steuereinrichtung bzw. Verteiler-Steuereinrichtung
- 142, 144: - Signalverbindungen
- 146: - Seite
- 148: - Erste Zulaufkupplung
- 150: - Erste Rücklaufkupplung
- 152: - Zulaufleitung
- 154: - Rücklaufleitung
- 156: - Zweite Zulaufkupplung
- 158: - Zweite Rücklaufkupplung
- 160: - Zulaufanschluss
- 162: - Rücklaufanschluss
- 164: - Regulierventil
- 166: - Antriebsmotor
- 168: - Elektrische Verbindung
- 170: - Temperatursensor
- 172: - Modulsteuereinrichtung
- 174: - Elektrische Steckkupplung
- 176: - Endstück
- 178: - Entlüftungsventil
- 180: - Anschluss
- 181: - Kommunikationsschnittstelle
- 182: - Raumthermostat
- 184: - Elektrischer Anschluss
- 202: - Hauptmodul
- 204: - Lastmodul
- 206: - Steuereinrichtung, Verteilersteuereinrichtung
- 208: - Zulaufanschluss
- 210: - Rücklaufanschluss
- 212: - Zulaufleitung
- 214: - Auslass
- 216: - Rücklaufleitung
- 218: - Einlass
- 220: - erste Zulaufkupplung
- 222: - erste Rücklaufkupplung
- 224: - zweite Zulaufkupplung
- 226: - zweite Rücklaufkupplung
- 228: - Lastkreis
- 229: - Eingang
- 230: - Regulierventil
- 231: - Ausgang
- 232: - Umwälzpumpe
- 234: - Rücklauf
- 235: - Verbindung
- 236: - Mischpunkt
- 238: - Rückschlagventil
- 240, 248: - Temperatursensor
- 250: - Hydraulikabschnitt
- 252: - Elektronikgehäuse
- 254: - Gehäuseteil
- 256: - Statorgehäuse
- 258: - Zulaufanschluss
- 260: - Rücklaufanschluss
- 262: - Endstück
- 264: - elektrischer Verbindungsstecker
- 266: - elektrische Verbindung, Datenbus
- 268, 270: - elektrischer Verbindungsstecker
- 272: - Modulsteuereinrichtung
- 274: - Raumthermostate
- 276: - Kommunikationsschnittstelle

## Patentansprüche

1. Hydraulischer Verteiler für ein hydraulisches Heizungs- und/oder Kühlsystem, welcher eine Zulaufleitung (152; 212) und eine Rücklaufleitung (154; 216) aufweist, wobei die Zulaufleitung (152; 212) zumindest einen Zulaufanschluss (160; 258) und die Rücklaufleitung (154; 216) zumindest einen Rücklaufanschluss (162; 260) zum Anschluss eines Lastkreises (228) aufweist,
wobei
der Verteiler modular aufgebaut ist mit einem Hauptmodul (102; 202) und zumindest einem an das Hauptmodul (102; 202) angefügten Lastmodul (104; 204),
das Hauptmodul (102; 202) zumindest einen Abschnitt der Zulaufleitung (152; 212) und/oder der Rücklaufleitung (154; 216) sowie einen elektrischen Anschluss aufweist,
das zumindest eine Lastmodul (104; 204) einen Abschnitt der Zulaufleitung (152; 212) mit einem Zulaufanschluss (160; 258) und/oder einen Abschnitt der Rücklaufleitung (154; 216) mit einem Rücklaufanschluss (162; 260) sowie zumindest einer Reguliereinrichtung (164; 230) zum Regulieren des Durchflusses durch einen an den Zulauf- und den Rücklaufanschluss angeschlossenen Lastkreis aufweist,
das Hauptmodul (102; 202) eine Verteiler-Steuereinrichtung (149; 206) aufweist, welche zur Steuerung der Reguliereinrichtung (164; 230) in dem zumindest einen und vorzugsweise in mehreren Lastmodulen (104; 204) ausgebildet ist, **dadurch gekennzeichnet, dass**
das Lastmodul (104; 204) an einem ersten Längsende zumindest einen ersten elektrischen Steckkontakt als Teil einer elektrischen Kupplung (174; 268, 270) aufweist, wobei an dem Hauptmodul (102; 202) an einer dem Lastmodul (104; 204) zugewandten Seite ein korrespondierender zweiter elektrischer Steckkontakt (174; 264) ausgebildet ist, welcher mit dem ersten Steckkontakt des Lastmoduls (104; 204) lösbar in Kontakt bringbar ist, und
dass das Lastmodul (104; 204) an einem zweiten, dem ersten Längsende entgegengesetzten Längsende einen zweiten elektrischen Steckkontakt (174; 270) aufweist, welcher mit einem ersten elektrischen Steckkontakt (174; 268) an einem ersten Längsende eines zweiten Lastmoduls (104; 204) lösbar in Kontakt bringbar ist.

2. Hydraulischer Verteiler nach Anspruch 1, **dadurch gekennzeichnet, dass** das Hauptmodul (102; 202) und das Lastmodul (104; 204) zueinander korrespondierende mechanische und hydraulische Verbindungen (148, 150, 156, 158; 220, 222, 224, 226) und eine elektrische (168; 266) Verbindung aufweisen, welche eine lösbare mechanische, hydraulische und elektrische Verbindung zwischen dem Hauptmodul (102; 202) und dem Lastmodul (104; 204) ermöglichen.

3. Hydraulischer Verteiler nach Anspruch 2, **dadurch gekennzeichnet, dass** das Lastmodul (104; 204) einen Abschnitt der Zulaufleitung und einen Abschnitt der Rücklaufleitung aufweist und an einem ersten Längsende erste hydraulische Kupplungen in Form einer ersten Rücklaufkupplung (150; 222), welche mit dem Abschnitt der Rücklaufleitung (154; 216) verbunden ist, und einer ersten Zulaufkupplung (148; 220), welche mit dem Abschnitt der Zulaufleitung (152; 212) verbunden ist, aufweist.

4. Hydraulischer Verteiler nach Anspruch 3, **dadurch gekennzeichnet, dass** das Lastmodul (104; 204) an einem zweiten, dem ersten Längsende entgegengesetzten Längsende zweite hydraulische Kupplungen in Form einer zweiten Rücklaufkupplung (158; 226), welche mit dem Abschnitt der Rücklaufleitung (154; 216) verbunden ist, und einer zweiten Zulaufkupplung (156; 224), welche mit dem Abschnitt der Zulaufleitung (152; 212) verbunden ist, aufweist, wobei die zweiten hydraulischen Kupplungen derart angeordnet und ausgestaltet sind, dass sie mit den ersten hydraulischen Kupplungen (148, 150; 220, 222) eines weiteren Lastmoduls (102; 202) in Eingriff treten können.

5. Hydraulischer Verteiler nach Anspruch 3 oder 4, **dadurch gekennzeichnet, dass** das Hauptmodul (102; 202) einen Abschnitt der Zulaufleitung und einen Abschnitt der Rücklaufleitung aufweist und an einer dem Lastmodul (104; 204) zugewandten Seite hydraulische Kupplungen aufweist, welche eine Zulaufkupplung (114; 214) und eine Rücklaufkupplung (122; 218) aufweisen und welche derart ausgestaltet sind, dass sie mit den ersten hydraulischen Kupplungen (148, 150; 220, 222) an dem Lastmodul (104; 204) in Eingriff treten können.

6. Hydraulischer Verteiler nach einem der vorangehenden Ansprüche, **dadurch gekennzeichnet, dass** die Verteiler-Steuereinrichtung zumindest eine Kommunikationsschnittstelle zum Empfang von Signalen von einem externen Steuerelement, insbesondere einem Raumthermostaten, aufweist.

7. Hydraulischer Verteiler nach einem der vorangehenden Ansprüche 3 bis 5, **dadurch gekennzeichnet, dass** die hydraulischen Kupplungen (148, 150, 156, 158; 220, 222, 224, 226) als Steckkupplungen mit einem männlichen Kupplungsteil und einem korrespondierenden weiblichen Kupplungsteil ausgebildet sind.

8. Hydraulischer Verteiler nach einem der vorangehenden Ansprüche, **dadurch gekennzeichnet, dass** in dem zumindest einen Lastmodul (104; 204) der erste und der zweite elektrische Steckkontakt elektrisch, insbesondere nach Art eines Datenbus (266) miteinander verbunden sind.

9. Hydraulischer Verteiler nach einem der vorangehenden Ansprüche, **dadurch gekennzeichnet, dass** die Reguliereinrichtung (164; 230) mit dem ersten elektrischen Steckkontakt (174; 268) zur Energieversorgung verbunden ist.

10. Hydraulischer Verteiler nach einem der vorangehenden Ansprüche, **dadurch gekennzeichnet, dass** das zumindest eine Lastmodul (104; 204) eine elektronische Modul-Steuereinrichtung (172; 272) aufweist, welche elektrisch mit dem ersten Steckkontakt und der Reguliereinrichtung (164; 230) verbunden ist und zur Kommunikation mit der Verteiler-Steuereinrichtung (140; 206) in dem Hauptmodul (102; 202) sowie zur Ansteuerung der Reguliereinrichtung (164; 230) ausgebildet ist.

11. Hydraulischer Verteiler nach Anspruch 10, **dadurch gekennzeichnet, dass** die Modul-Steuereinrichtung (172; 272) des zumindest einen Lastmoduls (104; 204) und die Verteiler-Steuereinrichtung (140; 206) über einen Datenbus miteinander verbunden und vorzugsweise zur automatischen Kommunikations-Kopplung ausgebildet sind.

12. Hydraulischer Verteiler nach einem der vorangehenden Ansprüche, **dadurch gekennzeichnet, dass** die Reguliereinrichtung (164; 230) als motorbetriebenes Ventil oder als Umwälzpumpe ausgebildet ist.

13. Hydraulischer Verteiler nach einem der vorangehenden Ansprüche, **dadurch gekennzeichnet, dass** in dem Lastmodul (104; 204) zumindest ein Temperatursensor (240) derart angeordnet ist, dass er die Temperatur eines durch den Rücklaufanschluss strömenden Fluides erfasst, wobei der Temperatursensor (240) vorzugsweise mit der Verteiler-Steuereinrichtung (140; 206) signalverbunden ist.

14. Hydraulischer Verteiler nach einem der vorangehenden Ansprüche, **dadurch gekennzeichnet, dass** das zumindest eine Lastmodul (104; 204) an einem ersten Längsende zumindest eine erste mechanische Kupplung und das Hauptmodul (102; 202) an einer dem Lastmodul zugewandten Seite zumindest eine zweite mechanische Kupplung aufweist, welche lösbar mit der ersten mechanischen Kupplung verbindbar ist.

15. Hydraulischer Verteiler nach einem der vorangehenden Ansprüche, **dadurch gekennzeichnet, dass** das zumindest eine Lastmodul (104; 204) an einem zweiten Längsende zumindest eine zweite mechanische Kupplung aufweist, welche lösbar mit einer ersten mechanischen Kupplung an einem ersten Längsende eines zweiten Lastmoduls (104; 204) verbindbar ist.

16. Hydraulischer Verteiler nach einem der vorangehenden Ansprüche, **dadurch gekennzeichnet, dass** das Lastmodul einen Abschnitt der Zulaufleitung und einen Abschnitt der Rücklaufleitung aufweist und zumindest derjenige Teil des Lastmoduls (104; 204), in welchem der Abschnitt der Zulaufleitung (152; 212), der Abschnitt der Rücklaufleitung (154; 216) sowie der Zulauf- und der Rücklaufanschluss gelegen sind, als einstückiges Bauteil, vorzugsweise aus Kunststoff ausgebildet ist.

## Claims

1. A hydraulic manifold for a hydraulic heating and/or cooling system which comprises a feed conduit (152; 212) and a return conduit (154; 216), wherein the feed conduit (152; 212) comprises at least one feed connection (160; 258), and the return conduit (154; 216) comprises at least one return connection (162; 260), for the connection of a load circuit (228),
wherein
the manifold is constructed in a modular manner with a main module (102; 202) and at least one load module (104; 204) which is joined onto the main module (102; 202),
the main module (102; 202) comprises at least one section of the feed conduit (152; 212) and/or of the return conduit (154; 216), as well as an electric connection,
the at least one load module (104; 204) comprises a section of the feed conduit (152; 212) with a feed connection (160; 258), and/or a section of the return conduit (154; 216) with a return connection (162; 260), as well as at least one regulating device (164; 230) for regulating the flow through a load circuit connected to the feed connection and to the return connection, and
the main module (102; 202) comprises a manifold control device (149; 206) which is designed for the control of the regulating device (164; 230) in the at least one and preferably several load modules (104; 204), **characterised in that**
the load module (104; 204) at a first longitudinal end comprises at least one first electric plug-in contact as part of an electrical coupling (174; 268, 270), wherein a corresponding second electrical plug-in contact (174; 264) is formed on the main module (102; 202) on a side facing the load module (104; 204) and can be releasably brought into contact with the first plug-in contact of the load module (104; 204), and
the load module (104; 204) at a second longitudinal end opposite to the first longitudinal end comprises a second electric plug-in contact (174; 270) which can be releasably brought into contact with a first electric plug-in contact (174; 268) on a first longitudinal end of a second load module (104; 204).

2. A hydraulic manifold according to claim 1, **characterised in that** the main module (102; 202) and the load module (104; 204) comprise mechanical and hydraulic connections (148, 150, 156, 158; 220, 222, 224, 226) and an electrical (168; 266) connection which correspond to one another and which permit a releasable mechanical, hydraulic and electrical connection between the main module (102; 202) and the load module (104; 204).

3. A hydraulic manifold according to claim 2, **characterised in that** the load module (104; 204) comprises a section of the feed conduit and a section of the return conduit and at a first longitudinal end comprises first hydraulic couplings in the form of a first return coupling (150; 222) which is connected to the section of the return conduit (154; 216), and of a first feed coupling (148; 220) which is connected to the section of the feed conduit (152; 212).

4. A hydraulic manifold according to claim 3, **characterised in that** the load module (104; 204) at a second longitudinal end opposite the first longitudinal end comprises second hydraulic couplings in the form of a second return coupling (158; 226) which is connected to the section of the return conduit (154; 216), and of a second feed coupling (156; 224) which is connected to the section of the feed conduit (152; 212), wherein the second hydraulic couplings are arranged and designed in a manner such that they can come into engagement with the first hydraulic couplings (148, 150; 220, 222) of a further load module (102; 202).

5. A hydraulic manifold according to claim 3 or 4, **characterised in that** the main module (102; 202) comprises a section of the feed conduit and a section of the return conduit, and at a side which faces the load module (104; 204) comprises hydraulic couplings which comprise a feed coupling (114; 214) and a return coupling (122; 218) and which are designed in a manner such that they can come into engagement with the first hydraulic couplings (148, 150; 220, 222) on the load module (104; 204).

6. A hydraulic manifold according to one of the preceding claims, **characterised in that** the manifold control device comprises at least one communication interface for receiving signals from an external control element, in particular from a room thermostat.

7. A hydraulic manifold according to one of the preceding claims 3 to 5, **characterised in that** the hydraulic couplings (148, 150, 156, 158; 220, 222, 224, 226) are designed as plug-in couplings with a male coupling part and a corresponding female coupling part.

8. A hydraulic manifold according to one of the preceding claims, **characterised in that** the first and the second electrical plug-in contact, in the at least one load module (104; 204) are connected to one another in an electrical manner, in particular in the manner of a data bus (266).

9. A hydraulic manifold according to one of the preceding claims, **characterised in that** the regulating device (164; 230) is connected to the first electrical plug-in contact (174; 268) for the energy supply.

10. A hydraulic manifold according to one of the preceding claims, **characterised in that** the at least one load module (104; 204) comprises an electronic module control device (172; 272) which is electrically connected to the first plug-in contact and to the regulating device (164; 230) and is designed for the communication with the manifold control device (140; 206) in the main module (102, 202) as well as for activating the regulating device (164, 230).

11. A hydraulic manifold according to claim 10, **characterised in that** the module control device (172; 272) of the at least one load module (104; 204), and the manifold control device (140; 206) are connected to one another via a data bus and are designed preferably for the automatic communication coupling.

12. A hydraulic manifold according to one of the preceding claims, **characterised in that** the regulating device (164; 230) is designed as a motor-operated valve or as a circulation pump.

13. A hydraulic manifold according to one of the preceding claims, **characterised in that** at least one temperature sensor (240) is arranged in the load module (104; 204) in a manner such that it detects the temperature of a fluid flowing through the return connection, wherein the temperature sensor (240) is signal-connected preferably to the manifold control device (140; 206).

14. A hydraulic manifold according to one of the preceding claims, **characterised in that** the at least one load module (104; 204) at a first longitudinal end comprises at least one first mechanical coupling, and the main module (102; 202) at a side facing the load module comprises at least one second mechanical coupling which is releasably connectable to the first mechanical coupling.

15. A hydraulic manifold according to one of the preceding claims, **characterised in that** the at least one load module (104; 204) at a second longitudinal end comprises at least one second mechanical coupling which is releasably connectable to a first mechanical coupling at a first longitudinal end of a second load module (104; 204).

16. A hydraulic manifold according to one of the preceding claims, **characterised in that** the load module comprises a section of the feed conduit and a section of the return conduit, and at least that part of the load module (104; 204), in which the section of the feed conduit (152; 212), the section of the return conduit (154; 216) as well as the feed connection and the return connection are situated, is designed as a single-piece component, preferably of plastic.

## Revendications

1. Distributeur hydraulique pour un système de chauffage et/ou de refroidissement hydraulique, qui comprend une conduite d'arrivée (152; 212) et une conduite de retour (154; 216), la conduite d'arrivée (152; 212) comprenant au moins un raccord d'arrivée (160; 258) et la conduite de retour (154; 216) comprenant au moins un raccord de retour (162; 260) pour le raccordement d'un circuit de charge (228),
où
le distributeur présente une configuration modulaire avec un module principal (102; 202) et au moins un module de charge (104; 204) rapporté au module principal (102; 202),
le module principal (102; 202) comprend au moins un tronçon de la conduite d'arrivée (152; 212) et/ou de la conduite de retour (154; 216) ainsi qu'un connecteur électrique,
ledit au moins un module de charge (104; 204) comprend un tronçon de la conduite d'arrivée (152; 212) avec un raccord d'arrivée (160; 258) et/ou un tronçon de la conduite de retour (154; 216) avec un raccord de retour (162; 260) ainsi qu'au moins un dispositif de régulation (164; 230) pour réguler le flux passant par un circuit de charge raccordé au raccord d'arrivée et au raccord de retour,
le module principal (102; 202) comprend un dispositif de commande de distributeur (149; 206) qui est configuré pour commander le dispositif de régulation (164; 230) dans ledit au moins un et de préférence dans plusieurs modules de charge (104; 204), **caractérisé en ce que**
le module de charge (104; 204) comprend, à une première extrémité longitudinale, au moins un premier contact électrique enfichable comme partie d'un couplage électrique (174; 268, 270), un deuxième contact électrique enfichable (174; 264) correspondont étant formé sur le module principal (102; 202) du côté orienté vers le module de charge (104; 204), qui est adapté pour être mis en contact de manière amovible avec le premier contact électrique enfichable du module de charge (104; 204), et que
le module de charge (104; 204) comprend, à une seconde extrémité longitudinale opposée à la première, un deuxième contact électrique enfichable (174; 270) qui est adapté pour être mis en contact de manière amovible avec un premier contact électrique enfichable (174; 268) à une première extrémité longitudinale d'un deuxième module de charge (104; 204).

2. Distributeur hydraulique selon la revendication 1, **caractérisé en ce que** le module principal (102; 202) et le module de charge (104; 204) comprennent des raccords mécaniques et hydrauliques (148, 150, 156, 158; 220, 222, 224, 226) correspondant les uns aux autres et une connexion électrique (168; 266), qui permettent une connexion amovible mécanique, hydraulique et électrique entre le module principal (102; 202) et le module de charge (104; 204).

3. Distributeur hydraulique selon la revendication 2, **caractérisé en ce que** le module de charge (104; 204) comprend un tronçon de la conduite d'arrivée et un tronçon de la conduite de retour et comprend à une première extrémité longitudinale des premiers couplages hydrauliques sous la forme d'un premier couplage de retour (150; 222) qui est raccordé au tronçon de la conduite de retour (154; 216) et d'un premier couplage d'arrivée (148; 220) qui est raccordé au tronçon de la conduite d'arrivée (152; 212).

4. Distributeur hydraulique selon la revendication 3, **caractérisé en ce que** le module de charge (104; 204) comprend à une seconde extrémité longitudinale opposée à la première extrémité longitudinale, des deuxièmes couplages hydrauliques sous la forme d'un deuxième couplage de retour (158; 226) qui est raccordé au tronçon de la conduite de retour (154; 216) et d'un deuxième couplage d'arrivée (156; 224) qui est raccordé au tronçon de la conduite d'arrivée (152; 212), les deuxièmes couplages hydrauliques étant disposés et configurés de façon qu'ils puissent venir en prise avec les premiers couplages hydrauliques (148, 150; 220, 222) d'un autre module de charge (102; 202).

5. Distributeur hydraulique selon la revendication 3 ou 4, **caractérisé en ce que** le module principal (102; 202) comprend un tronçon de la conduite d'arrivée et un tronçon de la conduite de retour et comprend sur un côté orienté vers le module de charge (104; 204), des couplages hydrauliques qui comportent un couplage d'arrivée (114; 214) et un couplage de retour (122; 218) et qui sont configurés de façon qu'ils puissent venir en prise avec les premiers couplages hydrauliques (148, 150; 220, 222) au module de charge (104; 204).

6. Distributeur hydraulique selon l'une des revendications précédentes, **caractérisé en ce que** le dispositif de commande de distributeur comprend au moins une interface de communication pour la réception de signaux provenant d'un élément de commande externe, notamment d'un thermostat d'une pièce.

7. Distributeur hydraulique selon l'une des revendications précédentes 3 à 5, **caractérisé en ce que** les couplages hydrauliques (148, 150, 156, 158; 220, 222, 224, 226) sont configurés comme couplages enfichables avec une partie de couplage mâle et une partie de couplage femelle correspondante.

8. Distributeur hydraulique selon l'une des revendications précédentes, **caractérisé en ce que** dans ledit au moins un module de charge (104; 204), le premier et le deuxième contacts électriques enfichables sont reliés l'un à l'autre électriquement, notamment sous la forme d'un bus de données (266).

9. Distributeur hydraulique selon l'une des revendications précédentes, **caractérisé en ce que** le dispositif de régulation (164; 230) est connecté au premier contact électrique enfichable (174; 268) pour l'alimentation en énergie.

10. Distributeur hydraulique selon l'une des revendications précédentes, **caractérisé en ce que** ledit au moins un module de charge (104; 204) comprend un dispositif de commande de module électronique (172; 272) qui est connecté électriquement au premier contact enfichable et au dispositif de régulation (164; 230) et est configuré pour la communication avec le dispositif de commande de distributeur (140; 206) dans le module principal (102; 202) et pour l'asservissement du dispositif de régulation (164; 230).

11. Distributeur hydraulique selon la revendication 10, **caractérisé en ce que** le dispositif de commande de module (172; 272) dudit au moins un module de charge (104; 204) et le dispositif de commande de distributeur (140; 206) sont reliés l'un à l'autre via un bus de données et sont configurés de préférence pour un couplage automatique de communication.

12. Distributeur hydraulique selon l'une des revendications précédentes, **caractérisé en ce que** le dispositif de régulation (164; 230) est configuré comme valve motorisée ou comme pompe de recirculation.

13. Distributeur hydraulique selon l'une des revendications précédentes, **caractérisé en ce qu'**au moins un capteur de température (240) est disposé dans le module de charge (104; 204) de façon telle qu'il capte la température d'un fluide passant par le raccord de retour, le capteur de température (240) étant relié par un signal de préférence au dispositif de commande de distributeur (140; 206).

14. Distributeur hydraulique selon l'une des revendications précédentes, **caractérisé en ce que** ledit au moins un module de charge (104; 204) comprend à une première extrémité longitudinale au moins un premier couplage mécanique et que le module principal (102; 202) comprend à un côté orienté vers le module de charge, au moins un deuxième couplage mécanique qui est adapté pour être accouplé de manière amovible au premier couplage mécanique.

15. Distributeur hydraulique selon l'une des revendications précédentes, **caractérisé en ce que** ledit au moins un module de charge (104; 204) comprend à une seconde extrémité longitudinale au moins un deuxième couplage mécanique qui est adapté pour être accouplé de manière amovible à un premier couplage mécanique à une première extrémité longitudinale d'un deuxième module de charge (104; 204).

16. Distributeur hydraulique selon l'une des revendications précédentes, **caractérisé en ce que** le module de charge comprend un tronçon de la conduite d'arrivée et un tronçon de la conduite de retour et qu'au moins la partie du module de charge (104; 204) dans laquelle sont situés le tronçon de la conduite d'arrivée (152; 212), le tronçon de la conduite de retour (154; 216) ainsi que les raccords d'arrivée et de retour, est formé en une seule pièce, de préférence en matière synthétique.
